# EUROPÄISCHE PATENTSCHRIFT

(11) **EP 3 956 607 B1**
(45) Veröffentlichungstag und Bekanntmachung des Hinweises auf die Patenterteilung: **29.01.2025**
(21) Anmeldenummer: 20719987.8
(22) Anmeldetag: 15.04.2020
(51) Int. Cl.: F23R 3/28, F23L 7/00, F02K 9/52, F02K 7/00

(54) **INJEKTORVORRICHTUNG FÜR EINE TRIEBWERKSVORRICHTUNG, TRIEBWERKSVORRICHTUNG UND LUFT- UND/ODER RAUMFAHRZEUG**
INJECTOR DEVICE FOR AN ENGINE DEVICE, ENGINE DEVICE, AND AIR- AND/OR SPACECRAFT
DISPOSITIF INJECTEUR POUR UN DISPOSITIF PROPULSEUR, DISPOSITIF PROPULSEUR ET AÉRONEF ET/OU ASTRONEF

(30) Priorität: 15.04.2019 DE 102019109929; 18.04.2019 DE 102019110258
(43) Veröffentlichungstag der Anmeldung: 23.02.2022
(73) Patentinhaber: Deutsches Zentrum für Luft- und Raumfahrt e.V., 51147 Köln (DE)
(72) Erfinder: ARMBRUSTER, Wolfgang, 71691 Freiberg am Neckar (DE); HARDI, Justin, 71672 Marbach am Neckar (DE); OSCHWALD, Michael, 74074 Heilbronn (DE); MIENE, Yannik, 74239 Hardthausen (DE); SUSLOV, Dmitry, 74219 Möckmühl (DE)
(74) Vertreter: Hoeger, Stellrecht & Partner Patentanwälte mbB
(86) Internationale Anmeldenummer: PCT/EP2020/060544
(87) Internationale Veröffentlichungsnummer: WO 2020/212396

(56) Entgegenhaltungen:
- EP-A1- 3 034 945
- WO-A1-2005/100858
- WO-A1-2013/004949
- WO-A1-2019/067114
- FR-A1- 2 570 129
- JP-A- 2010 236 386
- US-A1- 2018 163 967

## Beschreibung

Die vorliegende Erfindung betrifft eine Injektorvorrichtung für eine Triebwerksvorrichtung zum Einleiten eines fluidischen, insbesondere flüssigen, Brennstoffs und eines fluidischen, insbesondere flüssigen, Oxidationsmittels in eine Brennkammer der Triebwerksvorrichtung, welche Injektorvorrichtung eine Längsachse definiert und mindestens ein erstes Injektionselement umfasst, welches in Form eines ersten Fluidkanals ausgebildet ist zum fluidwirksamen Verbinden eines ersten Sammelraums für das fluidische Oxidationsmittel und der Brennkammer, und mindestens ein zweites Injektionselement, welches in Form eines zweiten Fluidkanals ausgebildet ist zum fluidwirksamen Verbinden eines zweiten Sammelraums für den fluidischen Brennstoff und der Brennkammer, wobei dem mindestens einen ersten Injektionselement mindestens ein erstes Resonatorelement zugeordnet ist und/oder wobei dem mindestens einen zweiten Injektionselement mindestens ein zweites Resonatorelement zugeordnet ist und wobei das mindestens eine erste Resonatorelement auf eine Eigenfrequenz des zugeordneten mindestens einen ersten Injektionselements abgestimmt ist und/oder dass das mindestens eine zweite Resonatorelement auf eine Eigenfrequenz des zugeordneten mindestens einen zweiten Injektionselements abgestimmt ist,.

Ferner betrifft die vorliegende Erfindung eine Triebwerksvorrichtung, insbesondere für ein Luftfahrzeug und/oder Raumfahrzeug, welche Triebwerksvorrichtung eine Brennkammer mit einer Düse und eine der Düse gegenüberliegend angeordnete Injektionsvorrichtung umfasst, wobei akustische Eigenschwingungen im mindestens einen ersten Injektionselement und/oder wobei akustische Eigenschwingungen im mindestens einen zweiten Injektionselement gedämpft werden, wobei dem mindestens einen ersten Injektionselement mindestens ein erstes Resonatorelement zugeordnet wird und/oder wobei dem mindestens einen zweiten Injektionselement mindestens ein zweites Resonatorelement zugeordnet wird, wobei das mindestens eine erste Resonatorelement auf eine Eigenfrequenz des zugeordneten mindestens einen ersten Injektionselements abgestimmt wird und/oder wobei das mindestens eine zweite Resonatorelement auf eine Eigenfrequenz des zugeordneten mindestens einen zweiten Injektionselements abgestimmt wird.

Außerdem betrifft die vorliegende Erfindung ein Luft- und/oder Raumfahrzeug mit einer Triebwerksvorrichtung und einem Brennstofftank zum Aufnehmen von einem fluidischen, insbesondere flüssigen, Brennstoff.

Überdies betrifft die vorliegende Erfindung ein Verfahren zum Betreiben einer Triebwerksvorrichtung, bei welchem Verfahren ein fluidischer, insbesondere flüssiger, Brennstoff und ein fluidisches, insbesondere flüssiges, Oxidationsmittels mit einer Injektorvorrichtung in eine Brennkammer der Triebwerksvorrichtung eingeleitet wird, welche Injektorvorrichtung mindestens ein erstes Injektionselement umfasst zum fluidwirksamen Verbinden eines ersten Sammelraums für das fluidische Oxidationsmittel und der Brennkammer, und mindestens ein zweites Injektionselement zum fluidwirksamen Verbinden eines zweiten Sammelraums für den fluidischen Brennstoff und der Brennkammer.

Triebwerksvorrichtungen der eingangs beschriebenen Art sind beispielsweise in Form von Flüssigtreibstoff-Raketentriebwerken bekannt. Bei diesen werden ein Brennstoff, auch als Treibstoff bezeichnet, und ein Oxidationsmittel, das auch als Oxidator bezeichnet wird, in die Brennkammer eingespritzt und dort zur Reaktion gebracht. Üblicherweise definieren Brennkammern derartiger Triebwerke ein zylindrisches Volumen, das stromabwärts durch eine konvergente Düse mit Schalldurchgang im engsten Querschnitt begrenzt wird. Stromaufwärts der Brennkammer werden der Brennstoff und das Oxidationsmittel beispielsweise durch sogenannte Injektorplatten eingespritzt. Insbesondere bei kryogenen Treibstoffen wie flüssigem Wasserstoff, welcher mit einem Oxidator in Form von flüssigem Sauerstoff kombiniert wird, oder bei einer Kombination von flüssigem Methan mit flüssigem Sauerstoff werden häufig sogenannte koaxiale Injektionselemente verwendet. Der flüssige Sauerstoff wird dabei zentral durch ein Röhrchen eingespritzt und der Brennstoff mit hoher Geschwindigkeit durch einen schmalen Ringspalt, welcher um das Röhrchen herum ausgebildet ist.

Eines der größten Risiken bei der Entwicklung und dem Betrieb einer Triebwerksvorrichtung, auch als Raketentriebwerk bezeichnet, für eine Rakete ist das Auftreten von hochfrequenten, thermoakustischen Verbrennungsinstabilitäten. Hochfrequente Verbrennungsinstabilitäten entstehen beispielsweise durch Wechselwirkung einer Brennkammerakustik mit Fluktuationen der Wärmefreisetzungsrate der bei der Verbrennung entstehenden Flamme. Dabei kommt es zur Verstärkung akustischer Druckschwankungen, wenn der Schwankungsanteil der Wärmefreisetzungsrate in Phase mit den Druckschwankungen ist.

Aufgrund der hohen Leistungsdichte in einer Raketenbrennkammer genügt bereits ein kleiner Bruchteil der umgesetzten chemischen Energie, die in das akustische Feld übertragen wird, um schnell anwachsende, hohe Druckamplituden bis hin zur Größenordnung des statischen Brennkammerdrucks zu erhalten. Diese Druckamplituden können zu mechanischem oder thermischem Versagen einer die Brennkammer begrenzenden Brennkammerwand führen.

Zur Lösung dieses Problems werden beispielsweise sogenannte Baffles in die Brennkammer eingesetzt. Bei diesen handelt es sich insbesondere um verlängerte Injektionselemente oder gekühlte Wände, welche von einer Injektorplatte aus, die von den Injektionselementen durchsetzt ist, in die Brennkammer hineinragen. Durch die Baffles soll die Brennkammersymmetrie gebrochen beziehungsweise durch Wirbelbildung bei Strömung über die Wände die akustische Energie transversaler Moden durch Dissipation verringert werden.

Ferner bekannt sind akustische Resonatoren, wie beispielsweise λ/4-Resonatoren oder Helmholtz-Resonators. Diese werden zur Dämpfung von Druckschwankungen durch Verbrennungsinstabilitäten in die Brennkammerwand eingebaut.

Die beschriebenen Baffles sind jedoch nur in der Lage, transversale Eigenmoden der Brennkammer zu dämpfen. Auf longitudinale Eigenmoden haben sie keinen Einfluss. Außerdem müssen sie aufwendig gekühlt werden, da die Baffles in das Brennkammervolumen hineinragen, wo Temperaturen bis zu 3600 K herrschen. Derartige Baffles werden üblicherweise nach dem "Versuch-und-Irrtum"-Prinzip entwickelt. Dadurch sind Dämpfungseigenschaften derselben kaum vorher abschätzbar und der Nachweis von deren Funktionalität erfordert teure Tests während des Entwicklungsprozesses einer Triebwerksvorrichtung.

Akustische Resonatoren können bei bekannter Schallgeschwindigkeit im Resonatorvolumen theoretisch auf beliebige Frequenzen und damit jegliche Brennkammermoden ausgelegt werden. Allerdings ist ein Einbau der Resonatoren in der Brennkammerwand problematisch. Bei einer Regenerationskühlung der Brennkammer müssen die Resonatoren zwischen die Kühlkanäle in der Brennkammer eingebaut werden. Dort steht jedoch nur wenig Bauraum zur Verfügung, sodass die Kühlkanäle aufwendig um die Resonatoren geleitet werden müssen. In der Regel wird dadurch eine Effizienz der Kühlung der Brennkammerwand im Bereich der Resonatoren verringert. Zudem ist die Fertigung der Brennkammerwand mit Resonatoren deutlich komplexer als ohne.

Ferner ist ein Problem von Resonatoren in der Brennkammerwand, dass die Schallgeschwindigkeit im Resonator nicht klar definiert ist. Durch die Öffnung der Resonatoren zur Brennkammer hin gelangen Verbrennungsgase in ein vom Resonator definiertes Resonatorvolumen. Abhängig vom Betriebspunkt des Triebwerks, des Strömungsfelds in der Brennkammer und einer Position der Resonatoren in Bezug zu den Injektionselementen können unterschiedliche Gaszusammensetzungen im Resonator vorhanden sein. Außerdem ist auch die Temperatur in den Resonatoren unbekannt. Sie befindet sich in einem Bereich zwischen zwei Extremwerten, die vorgegeben werden durch die Verbrennungstemperatur einerseits und eine Temperatur des Kühlfluids in den Kühlkanälen der Brennkammerwand andererseits. Sind die Temperaturen der Gaszusammensetzung im Resonator nicht bekannt, kann die Schallgeschwindigkeit in den Resonatoren nicht exakt vorhergesagt werden. Daher können Resonatoren in der Brennkammerwand ebenfalls nur durch aufwendige Versuche und Simulationen der Verbrennung und Kühlung ausgelegt werden. Außerdem ist zu berücksichtigen, dass die Schallgeschwindigkeiten in der Brennkammer und den Resonatoren nicht gleichförmig auf Veränderungen eines Betriebspunktes des Triebwerkes reagieren. Daher sind die Resonatoren strenggenommen nur auf eine Brennkammermode für einen speziellen Betriebspunkt ausgelegt. Beim Hochfahren des Triebwerks oder beim Abschaltvorgang sind die Resonatoren nicht angepasst, wodurch trotz der Resonatoren, die Dämpfungselemente bilden, Instabilitäten auftreten können.

Aus der JP 2010 236386 A ist eine Injektionsvorrichtung für eine Rakete bekannt. Die EP 3 034 945 A1 offenbart eine Brennstoffleitung für eine Gasturbine mit einem Dämpfer. Injektionselemente sind in der WO 2013/004949 A1 beschrieben. Die WO 2019/067114 A1 betrifft Brennstoffinjektoranordnungen für Gasturbinenantriebe. Eine Einrichtung zum Dämpfen von Brennkammerschwingungen bei Flüssigkeitsraketentriebwerken ist aus der FR 2 570 129 A1 bekannt. Die WO 2005/100858 A1 befasst sich mit der Dämpfung von Schwingungen in einer Brennkammer durch Resonatoren. Ein Injektorkopf mit einem Resonator für einen Gasturbinenantrieb ist in der US 2018/163967 A1 offenbart.

Es ist daher eine Aufgabe der vorliegenden Erfindung, eine Injektorvorrichtung für eine Triebwerksvorrichtung, eine Triebwerksvorrichtung und ein Luftund/oder Raumfahrzeug so zu verbessern, dass eine Verstärkung akustischer Druckschwankungen in einer Brennkammer minimiert oder ganz vermieden werden kann.

Diese Aufgabe wird bei einer Injektorvorrichtung für eine Triebwerksvorrichtung der eingangs beschriebenen Art erfindungsgemäß dadurch gelöst, dass das mindestens eine erste Resonatorelement und der erste Sammelraum über einen ersten Spülkanal fluidwirksam miteinander verbunden sind und/oder dass das mindestens eine zweite Resonatorelement und der zweite Sammelraum über einen zweiten Spülkanal fluidwirksam miteinander verbunden sind, so dass durch das jeweilige Resonatorelement das durch die Injektionselemente strömende Fluid ebenfalls mit einer geringen Strömungsgeschwindigkeit strömt, wodurch sichergestellt werden kann, dass im jeweiligen Resonatorelement zu jedem Zeitpunkt dieselben Bedingungen herrschen wie in dem zu dämpfenden Injektionselement .

Das mindestens eine erste Resonatorelement und das mindestens eine zweite Resonatorelement bilden Dämpfungselemente, um mögliche Druckschwankungen im jeweiligen Injektionselement zu dämpfen. Auf diese Weise kann also eine Akustik in den Injektionselementen gedämpft werden, um Injektor-gekoppelte Verbrennungsinstabilitäten in der Brennkammer zu vermeiden. Es ist grundsätzlich möglich, entweder die Einspritzung des Brennstoffs oder die Einspritzung des Oxidationsmittels oder die Einspritzung sowohl des Brennstoffs als auch des Oxidationsmittels durch entsprechende Resonatorelemente zu dämpfen. Ist insbesondere eine große Anzahl von Injektionselementen vorgesehen, können zudem auf einfache Weise unterschiedliche Injektoreigenmoden gedämpft werden. Dies kann durch entsprechend unterschiedliche Auslegung der ersten und/oder zweiten Resonatorelemente erfolgen. Insbesondere kann dabei auch eine Position des jeweiligen Injektionselements genutzt werden. So können bestimmte Injektionselemente, bei denen eine Kopplung mit tangentialen Moden der Brennkammer erwartet wird, entsprechend gedämpft werden. Ferner können Injektionselemente, bei denen eine Kopplung mit einer radialen Brennkammermode erwartet wird, ebenfalls durch Auslegung des zugeordneten Resonatorelements oder der zugeordneten Resonatorelemente entsprechend gedämpft werden. Ferner ist es durch die vorgeschlagene Zuordnung der Resonatorelemente zu den Injektionselementen möglich, diese insbesondere räumlich nahe an den Injektionselementen, beispielsweise in einem Injektionskopf beziehungsweise einer Injektorplatte der Injektorvorrichtung, anzuordnen. Diese ist thermisch weniger belastet als die Brennkammer. Durch die vorgeschlagene Ausgestaltung ist es insbesondere bei Injektor-gekoppelten Instabilitäten nicht mehr erforderlich, Resonatoren in der Brennkammerwand vorzusehen, sodass eine Konstruktion der Kühlkanäle in der Brennkammerwand vereinfacht wird. Dadurch lassen sich sowohl Konstruktion als auch Herstellung der Brennkammer insgesamt vereinfachen. Die Zuordnung der Resonatorelemente zu den Injektionselementen ermöglicht insbesondere eine räumliche Anordnung im Injektorkopf, welcher häufig aus Werkstoffen wie nicht rostender Edelstahl oder Legierungen auf Nickelbasis ausgebildet ist. Dies ermöglicht es insbesondere, den Injektorkopf mittels additiver Fertigungsverfahren wie beispielsweise selektivem Laserschmelzen auszubilden. Dadurch wird die Ausbildung akustischer Resonatoren im Injektorkopf vereinfacht. Ferner wird grundsätzlich auch eine Dämpfung von ringförmigen Injektionselementen auf einfache Weise ermöglicht. Und schließlich ermöglicht es die direkte Zuordnung von Resonatorelementen zu den Injektionselementen, diese auch noch bei bereits bestehenden Brennkammern nachzurüsten, da die Brennkammerwand selbst nicht verändert werden muss. Lediglich Änderungen im Bereich der Injektorvorrichtung sind erforderlich. So lassen sich herkömmliche Brennkammern durch die wie vorgeschlagen weitergebildeten Injektorvorrichtungen auf einfache Weise nachrüsten. Fluidische Brennstoffe beziehungsweise fluidische Oxidationsmittel sind insbesondere flüssige und/oder gasförmige Brennstoffe beziehungsweise flüssige und/oder gasförmige Oxidationsmittel. So kann beispielsweise an Bord eines Luftfahrzeugs flüssiger Brennstoff mitgeführt werden, das Oxidationsmittel kann in Form von gasförmigem Sauerstoff der Atmosphäre entzogen und der Triebwerksvorrichtung zugeführt werden. Vorteilhaft ist es, dass das mindestens eine erste Resonatorelement und der erste Sammelraum über einen ersten Spülkanal fluidwirksam miteinander verbunden sind und/oder wenn das mindestens eine zweite Resonatorelement und der zweite Sammelraum über einen zweiten Spülkanal fluidwirksam miteinander verbunden sind. Derartige Spülkanäle vorzusehen hat insbesondere den Vorteil, dass verbleibende komprimierte Restgase im jeweiligen Resonatorelement vermieden werden können. Die Spülkanäle führen insbesondere dazu, dass durch den jeweiligen Resonator das durch die Injektionselemente strömende Fluid ebenfalls mit einer geringen Strömungsgeschwindigkeit strömt. Dadurch kann insbesondere sichergestellt werden, dass im jeweiligen Resonator zu jedem Zeitpunkt dieselben Bedingungen herrschen wie in dem zu dämpfenden Injektionselement. Dies hat insbesondere einen großen Vorteil dahingehend, dass dieselbe Schallgeschwindigkeit im Injektionselement wie in dem ein Dämpfungselement bildenden Resonatorelement die Auslegung einer Geometrie des Resonatorelements unabhängig von der Schallgeschwindigkeit und somit auch unabhängig vom jeweiligen Fluid macht. Aufgrund einer vergleichsweise geringen Strömungsgeschwindigkeit und Machzahl im Injektionselement kann diese vernachlässigt werden. Daher müssen lediglich die Dimensionen der Resonatorelemente auf die jeweiligen Injektionselemente ausgelegt werden. Mit anderen Worten bedeutet dies jedoch, dass dann, wenn das Injektionselement und das zugehörige Resonatorelement nur noch über ihre Geometrie miteinander verknüpft sind, die Resonatorelemente nicht mehr nur noch für einen definierten Betriebspunkt die Eigenmoden der Brennkammer dämpfen, sondern für alle erdenklichen Betriebszustände die Eigenfrequenzen der Injektionselemente dämpfen können. Eine wesentlich aufwendigere Simulation der Brennkammerakustik mit Verbrennung kann daher entfallen und die Resonatorelemente können mit einer akustischen Modalanalyse ausgelegt werden. Eine Feinjustierung der Resonatorelemente kann so auch mit einem Ersatzfluid wie beispielsweise Luft erfolgen. Dadurch kann ein Auslegungsaufwand im Vergleich zu Heißgastests bei Resonatorelementen in der Brennkammer drastisch reduziert werden.

Günstig ist es, wenn das mindestens eine erste Resonatorelement fluidwirksam mit dem mindestens einen ersten Injektionselement verbunden ist und/oder wenn das mindestens eine zweite Resonatorelement fluidwirksam mit dem mindestens einen zweiten Injektionselement verbunden ist. Diese Ausgestaltung ermöglicht es insbesondere, dass der Brennstoff in das mindestens eine erste Resonatorelement und/oder das Oxidationsmittel in das mindestens eine zweite Resonatorelement gelangen kann. Dadurch kann insbesondere erreicht werden, dass nahezu identische Bedingungen, das heißt ein identischer Druck und eine identische Temperatur, im Injektionselement sowie im zugeordneten Resonatorelement herrschen. Dies vereinfacht insbesondere die Auslegung der Resonatorelemente, da letztlich nur deren Volumen berücksichtigt werden muss. Die Auslegung der Resonatorelemente vereinfacht sich dadurch stark und wird in erster Linie unabhängig von einer momentanen Leistung der Brennkammer im Betrieb. Eine Auslegung des jeweiligen Resonatorelements auf eine gewünschte, zu dämpfende Frequenz des zugeordneten Injektionselements kann mit einfachen Methoden erfolgen. Da die Fluideigenschaften im Injektor und im Resonator aufgrund der Ausgestaltung gleich oder im Wesentlichen gleich sind, genügt bereits eine Modalanalyse, um eine Resonatorgeometrie zu ermitteln. Eine komplexe, aufwendige und mit Unsicherheit versehene Verbrennungsmodellierung und Strömungssimulation in der Brennkammer sind nicht erforderlich. Dadurch kann beispielsweise eine Validierung der Funktionsweise der Injektorvorrichtung und der Brennkammer mit einfachen Kaltgasexperimenten erfolgen, da die Wirkungsweise und Funktion der Injektorvorrichtung konstruktionsbedingt unabhängig vom verwendeten Fluid ist.

Vorteilhaft ist es, wenn das mindestens eine erste Resonatorelement einen ersten Resonatorhohlraum umfasst, welcher ein erstes Resonatorvolumen definiert, und wenn ein erster Resonatorkanal das mindestens eine erste Injektionselement und den ersten Resonatorhohlraum fluidwirksam verbindet und/oder wenn das mindestens eine zweite Resonatorelement einen zweiten Resonatorhohlraum umfasst, welcher ein zweites Resonatorvolumen definiert, und wenn ein zweiter Resonatorkanal das mindestens eine zweite Injektionselement und den zweiten Resonatorhohlraum fluidwirksam verbindet. Durch die fluidwirksame Verbindung der Resonatorelemente mit den Injektionselementen durch die entsprechenden Resonatorkanäle kann insbesondere erreicht werden, dass Eigenschaften des Brennstoffs im jeweiligen Injektionselement sowie im zugehörigen Resonatorelement und entsprechend auch des Oxidationsmittels im jeweiligen Injektionselement sowie im zugehörigen Resonatorelement identisch sind. Damit ist eine gewünschte Wirkung der Resonatorelemente unabhängig von einem jeweiligen Betriebspunkt der Triebwerksvorrichtung.

Günstig ist es, wenn der erste Resonatorkanal ein erstes Resonatorkanalvolumen definiert und wenn das erste Resonatorkanalvolumen kleiner ist als das erste Resonatorvolumen und/oder wenn der zweite Resonatorkanal ein zweites Resonatorkanalvolumen definiert und wenn das zweite Resonatorkanalvolumen kleiner ist als das zweite Resonatorvolumen. Auf diese Weise kann insbesondere erreicht werden, dass ein Einfluss der Resonatorkanäle auf die Eigenschaften der Resonatorelemente minimiert wird.

Grundsätzlich ist es möglich, den ersten Resonatorhohlraum oder den zweiten Resonatorhohlraum in seiner Form beliebig zu gestalten. Auf einfache Weise ausbilden lassen sich diese Resonatorhohlräume, wenn sie in Form eines hohlen Zylinders, eines hohlen Quaders oder einer Hohlkugel ausgebildet sind.

Vorteilhaft ist es, wenn das mindestens eine erste Injektionselement eine erste Injektionselementlängsachse definiert und/oder wenn das mindestens eine zweite Injektionselement eine zweite Injektionselementlängsachse definiert. Brennstoffe und/oder Oxidationsmittel lassen sich insbesondere durch geradlinig ausgebildete Injektionselemente einfach und in definierter Weise in die Brennkammer einspritzen.

Eine einfache Konstruktion der Injektorvorrichtung wird insbesondere dadurch ermöglicht, dass die erste Injektionselementlängsachse und/oder die zweite Injektionselementlängsachse parallel zur Längsachse verlaufen.

Gemäß einer weiteren bevorzugten Ausführungsform der Erfindung kann vorgesehen sein, dass das mindestens eine erste Resonatorelement eine erste Resonatorelementlängsachse definiert und/oder dass das mindestens eine zweite Resonatorelement eine zweite Resonatorelementlängsachse definiert. Derartig ausgebildete Resonatorelemente eignen sich hervorragend, um ihre Dämpfungseigenschaften auf einfache Weise zu berechnen.

Günstig ist es, wenn die erste Injektionselementlängsachse und die erste Resonatorelementlängsachse quer, insbesondere senkrecht, zueinander verlaufen und/oder wenn die zweite Injektionselementlängsachse und die zweite Resonatorelementlängsachse quer, insbesondere senkrecht, zueinander verlaufen. Eine solche Ausgestaltung ermöglicht insbesondere eine kompakte Anordnung der Resonatorelemente in Bezug zu den Injektionselementen, beispielsweise in einer Injektorplatte.

Vorzugsweise sind das das mindestens eine erste Injektionselement und das mindestens eine zweite Injektionselement koaxial zueinander angeordnet oder ausgebildet sind. Dies ermöglicht es insbesondere, den Brennstoff durch einen Ringkanal, der das Injektionselement für das Oxidationsmittel umgibt, in die Brennkammer einzuspritzen. Eine solche koaxiale Einspritzung von Brennstoff und Oxidationsmittel ermöglicht eine gute Durchmischung beim Eintritt in die Brennkammer und damit einen hohen Verbrennungswirkungsgrad.

Günstig ist es, wenn der mindestens eine erste Spülkanal eine erste Spülkanallängsachse definiert und/oder wenn der mindestens eine zweite Spülkanal eine zweite Spülkanallängsachse definiert. Derartige Spülkanäle lassen sich so auf einfache Weise beispielsweise durch Bohrungen ausbilden.

Vorteilhaft ist es, wenn die erste Spülkanallängsachse und die Längsachse parallel oder im Wesentlichen parallel zueinander verlaufen und/oder wenn die zweite Spülkanallängsachse und die Längsachse parallel oder im Wesentlichen parallel zueinander verlaufen. Eine derartige Ausgestaltung ermöglicht einen einfachen Aufbau und somit eine einfache Herstellung der Injektorvorrichtung.

Um einen Einfluss der Spülkanäle auf die Resonatorelemente zu minimieren, ist es günstig, wenn eine vom mindestens einen ersten Spülkanal definierte erste Spülkanalquerschnittsfläche kleiner ist als eine vom ersten Resonatorkanal definierte erste Resonatorkanalquerschnittsfläche und/oder wenn eine vom mindestens einen zweiten Spülkanal definierte zweite Spülkanalquerschnittsfläche kleiner ist als eine vom zweiten Resonatorkanal definierte zweite Resonatorkanalquerschnittsfläche.

Günstig ist es, wenn das mindestens eine erste Resonatorelement und/oder wenn das mindestens eine zweite Resonatorelement in Form eines Helmholtz-Resonators oder in Form eines λ/4-Resonators ausgebildet ist. Derartige Resonatorelemente lassen sich auf einfache Weise ausbilden und auf Eigenfrequenzen der zugeordneten Injektionselemente abstimmen.

Vorteilhaft ist es, wenn das mindestens eine erste Resonatorelement mindestens einem ersten Injektionselement zugeordnet ist und/oder wenn das mindestens eine zweite Resonatorelement mindestens einem zweiten Injektionselement zugeordnet ist. Diese Ausgestaltung ermöglicht es insbesondere, ein Resonatorelement nicht nur einem, sondern auch zwei, drei oder mehr Injektionselementen zuzuordnen. Dadurch kann ein Aufbau der Injektorvorrichtung vereinfacht werden, da beispielsweise nur ein einziges Resonatorelement erforderlich ist, um dieses zwei oder mehr Injektionselementen zuzuordnen.

Um eine optimierte Reaktion von Brennstoff und Oxidationsmittel in der Brennkammer zu ermöglichen, ist es vorteilhaft, wenn die Injektorvorrichtung eine Mehrzahl erster Injektionselemente und/oder eine Mehrzahl zweiter Injektionselemente umfasst. Insbesondere kann die Anzahl der ersten Injektionselemente mit der Anzahl der zweiten Injektionselemente übereinstimmen.

Günstig ist es, wenn die der Mehrzahl erster Injektionselemente zugeordneten ersten Resonatorelemente auf unterschiedliche Eigenfrequenzen der Mehrzahl erster Injektionselemente abgestimmt sind und/oder wenn die der Mehrzahl zweiter Injektionselemente zugeordneten zweiten Resonatorelemente auf unterschiedliche Eigenfrequenzen der Mehrzahl zweiter Injektionselemente abgestimmt sind. Dies ermöglicht es insbesondere, Injektionselemente spezifisch zu dämpfen. Beispielsweise können die Resonatorelemente auf bestimmte Eigenfrequenzen der Injektionselemente abgestimmt werden, die vorzugsweise mit Longitudinalmoden der Brennkammer koppeln. Andere können auf Eigenfrequenzen abgestimmt werden, die mit transversalen oder radialen Moden der Brennkammer koppeln. So kann eine Entwicklung von sehr starken Injektor-gekoppelten Druckschwankungen in der Brennkammer wirkungsvoll unterbunden werden. Durch die Dämpfung der jeweiligen Injektionselemente werden Flammenoszillationen in der Brennkammer mit den akustischen Eigenfrequenzen der Injektionselemente verhindert. Wo keine Schwankungen der Wärmefreisetzung entstehen, können sie auch nicht mit Brennkammermoden koppeln und dadurch zu hochfrequenten, thermoakustischen Verbrennungsinstabilitäten, welche durch die Injektorkopplung entstehen, in der Brennkammer führen.

Günstig ist es, wenn die ersten Resonatorelemente unterschiedliche Formen und/oder unterschiedliche erste Resonatorvolumen aufweisen und/oder wenn die zweiten Resonatorelemente unterschiedliche Formen und/oder unterschiedliche zweite Resonatorvolumen aufweisen. Eine derartige Ausgestaltung ermöglicht es insbesondere auf einfache Weise, unterschiedliche Eigenfrequenzen der Injektionselemente zu dämpfen, denen die Resonatorelemente zugeordnet sind. Selbstverständlich ist es grundsätzlich auch möglich, alle ersten und/oder zweiten Resonatorelemente identisch auszubilden.

Gemäß einer weiteren bevorzugten Ausführungsform der Erfindung kann vorgesehen sein, dass das mindestens eine erste Resonatorelement im Bereich eines in Richtung auf den ersten Sammelraum weisenden Einlasses des mindestens einen ersten Injektionselements angeordnet oder ausgebildet ist und/oder wenn dass das mindestens eine zweite Resonatorelement im Bereich eines in Richtung auf den zweiten Sammelraum weisenden Einlasses des mindestens einen zweiten Injektionselements angeordnet oder ausgebildet ist. Eine derartige Anordnung der Resonatorelemente ermöglicht insbesondere einen besonders kompakten Aufbau der Injektorvorrichtung. Insbesondere kann so eine Länge von optional vorgesehenen Spülkanälen auf einfache Weise minimiert werden.

Günstig ist es, wenn die die Injektorvorrichtung eine erste Injektorplatte und eine zweite Injektorplatte umfasst, wenn die mindestens einen ersten Resonatorelemente in der ersten Injektorplatte angeordnet oder ausgebildet sind und/oder wenn die mindestens einen zweiten Resonatorelemente in der zweiten Injektorplatte angeordnet oder ausgebildet sind. Eine derartige Anordnung der Resonatorelemente ermöglicht es insbesondere, bei bekannten Triebwerksvorrichtungen die Injektorplatten auszutauschen und auf diese Weise die Injektorvorrichtung mit den Resonatorelementen auf einfache Weise nachzurüsten.

Ein einfacher Aufbau der Injektorvorrichtung kann insbesondere dadurch erreicht werden, dass die erste Injektorplatte und die zweite Injektorplatte parallel zueinander angeordnet oder ausgebildet sind. Insbesondere können diese quer zur Längsachse angeordnet oder ausgebildet werden.

Ein besonders kompakter Aufbau der Injektorvorrichtung kann insbesondere dadurch erreicht werden, dass der zweite Sammelraum zwischen der ersten Injektorplatte und der zweiten Injektorplatte angeordnet oder ausgebildet ist.

Günstig ist es, wenn die erste Injektorplatte in Form einer Drosselplatte ausgebildet ist und wenn dem mindestens einen ersten Injektionselement im Bereich von dessen Einlass ein erstes Drosselelement zugeordnet ist, welches einen kleineren Strömungsquerschnitt als das mindestens eine erste Injektionselement definiert, und wenn das erste Drosselelement in oder an der Drosselplatte angeordnet oder ausgebildet ist. Dies ermöglicht insbesondere einen kompakten Aufbau der Injektorvorrichtung. Beispielsweise kann diese durch ein generatives Herstellungsverfahren ausgebildet werden.

Die Herstellung der Injektorvorrichtung kann insbesondere dadurch vereinfacht werden, dass das mindestens eine erste Injektionselement in Form einer Bohrung der Drosselplatte ausgebildet ist.

Günstigerweise ist das mindestens eine erste Injektionselement an einem plattenförmigen Injektorelementhalter angeordnet oder in Form einer Injektorhülse ausgebildet. Derartige erste Injektionselemente können auf einfache Weise hergestellt werden.

Ein kompakter Aufbau der Injektorvorrichtung kann insbesondere dadurch erreicht werden, dass der Injektorelementhalter einerseits flächig an der ersten Injektorplatte anliegt und andererseits den zweiten Sammelraum begrenzt.

Vorteilhafterweise ist das mindestens eine zweite Injektionselement an oder in einem Einspritzkopf angeordnet oder ausgebildet. Der Einspritzkopf kann insbesondere eine Begrenzung der Brennkammer bilden, so dass ein kompakter Aufbau einer Triebwerksvorrichtung ermöglicht wird.

Vorteilhafterweise bildet der Einspritzkopf eine die Brennkammer begrenzende Stirnwand, welche einer Düse der Brennkammer gegenüberliegend angeordnet oder ausgebildet ist. Die Düse der Brennkammer dient als Auslass der Reaktionsprodukte, wodurch ein Vorschub der Triebwerksvorrichtung vorgegeben wird.

Auf einfache Weise lässt sich das mindestens eine zweite Injektionselement ausbilden, wenn es in Form einer Bohrung des Einspritzkopfes ausgebildet ist.

Ein zweites Drosselelement kann insbesondere auf einfache Weise dadurch ausgebildet werden, dass sich das mindestens eine zweite Injektionselement im Querschnitt zur Ausbildung des zweiten Drosselelements einstufig verjüngt.

Die eingangs gestellte Aufgabe wird ferner bei einer Triebwerksvorrichtung der eingangs beschriebenen Art erfindungsgemäß dadurch gelöst, dass die Injektorvorrichtung in Form einer der oben beschriebenen Injektorvorrichtungen ausgebildet ist.

Eine Triebwerksvorrichtung mit einer solchen Injektorvorrichtung auszustatten hat insbesondere die oben im Zusammenhang mit bevorzugten Ausführungsformen von Injektorvorrichtungen beschriebenen Vorteile.

Vorzugsweise ist die Triebwerksvorrichtung in Form eines Raketentriebwerks ausgebildet. Ein solches Raketentriebwerk lässt sich insbesondere einsetzen, um eine Rakete anzutreiben.

Vorteilhaft ist es, wenn die Brennkammer eine der Düse gegenüberliegende Stirnwand umfasst und wenn mindestens ein Teil der Injektorvorrichtung in der Stirnwand angeordnet oder ausgebildet ist. Eine solche Triebwerksvorrichtung kann insbesondere kompakt ausgebildet werden.

Günstigerweise umfasst die Triebwerksvorrichtung mindestens einen Sammelraum, welcher von einer Sammelraumstirnwand begrenzt ist. Beispielsweise kann die Triebwerksvorrichtung für den Brennstoff und das Oxidationsmittel jeweils einen getrennten Sammelraum aufweisen. Die Sammelraumstirnwand kann insbesondere quer zu einer von der Triebwerksvorrichtung definierten Längsachse verlaufend angeordnet oder ausgebildet sein. Beispielsweise kann eine Sammelraumstirnwand durch die der Düse gegenüberliegende Stirnwand ausgebildet werden und einen Sammelraum für den Brennstoff begrenzen. Eine zweite Sammelraumstirnwand des Sammelraums für den Brennstoff kann beispielsweise gebildet werden durch den oben beschriebenen Injektorelementhalter.

Die eingangs gestellte Aufgabe wird ferner bei einem Luft- und/oder Raumfahrzeug der eingangs beschriebenen Art erfindungsgemäß dadurch gelöst, dass die Triebwerksvorrichtung in Form einer der oben beschriebenen Triebwerksvorrichtungen ausgebildet ist.

Eine solche Triebwerksvorrichtung vorzusehen hat insbesondere den Vorteil, dass auch das Luft- und/oder Raumfahrzeug die Vorteile aufweist, die sich aus der besonderen Gestaltung der Triebwerksvorrichtung ergeben.

Vorzugsweise ist der Brennstofftank ausgebildet zum Aufnehmen von flüssigem Wasserstoff oder flüssigem Methan. Dies ermöglicht es beispielsweise, das Luft- und/oder Raumfahrzeug von einem Treibstoffgemisch antreiben zu lassen, welches entweder durch eine Kombination von flüssigem Wasserstoff und flüssigem Sauerstoff oder durch eine Kombination von flüssigem Methan und flüssigem Sauerstoff gebildet wird.

Ferner ist es günstig, wenn das Luft- und/oder Raumfahrzeug einen Oxidationsmitteltank zum Aufnehmen eines fluidischen Oxidationsmittels umfasst. Insbesondere kann es sich bei dem fluidischen Oxidationsmittel um ein flüssiges Oxidationsmittel handeln, beispielsweise flüssigen Sauerstoff. Einen Oxidationsmitteltank vorzusehen ermöglicht insbesondere, das Luft- und/oder Raumfahrzeug auch im Weltraum zu betreiben, wo keine sauerstoffhaltige Atmosphäre zur Verfügung steht, der gasförmiger Sauerstoff als Oxidationsmittel entnommen werden kann.

Die eingangs gestellte Aufgabe wird ferner bei einem Verfahren der eingangs beschriebenen Art erfindungsgemäß dadurch gelöst, dass das mindestens eine erste Resonatorelement und der erste Sammelraum über einen ersten Spülkanal fluidwirksam miteinander verbunden werden und/oder dass das mindestens eine zweite Resonatorelement und der zweite Sammelraum über einen zweiten Spülkanal fluidwirksam miteinander verbunden werden und dass durch das jeweilige Resonatorelement das durch die Injektionselemente strömende Fluid ebenfalls mit einer geringen Strömungsgeschwindigkeit strömen gelassen wird, wodurch sichergestellt werden kann, dass im jeweiligen Resonator zu jedem Zeitpunkt dieselben Bedingungen herrschen wie in dem zu dämpfenden Injektionselement.

In der beschriebenen Weise zu verfahren hat insbesondere den Vorteil, dass die Entwicklung sehr starker Injektor-gekoppelten Druckschwankungen in der Brennkammer wirkungsvoll unterbunden werden. Durch die Dämpfung der jeweiligen Injektionselemente werden Flammenoszillationen in der Brennkammer mit den akustischen Eigenfrequenzen der Injektionselemente verhindert. Wo keine Schwankungen der Wärmefreisetzung entstehen, können sie auch nicht mit Brennkammermoden koppeln und dadurch zu hochfrequenten, thermoakustischen Verbrennungsinstabilitäten, welche durch die Injektorkopplung entstehen, in der Brennkammer führen.

Die nachfolgende Beschreibung bevorzugter Ausführungsformen der Erfindung dient im Zusammenhang mit den Zeichnungen der näheren Erläuterung. Es zeigen:
- Figur 1:: eine schematische Längsschnittansicht eines Ausführungsbeispiels einer Triebwerksvorrichtung;
- Figur 2:: eine vergrößerte Ausschnittsansicht der Triebwerksvorrichtung aus Figur 1;
- Figur 3:: eine schematische perspektivische Explosionsdarstellung der Triebwerksvorrichtung aus Figur 1;
- Figur 4:: eine Schnittansicht längs Linie 4-4 in Figur 3;
- Figur 5:: eine Schnittansicht längs Linie 5-5 in Figur 3;
- Figur 6:: eine schematische Längsschnittansicht eines Teils eines Ausführungsbeispiels einer Injektorvorrichtung;
- Figur 7:: eine schematische, teilweise Explosionsdarstellung einer Triebwerksvorrichtung mit abgenommener Drosselplatte;
- Figur 8:: eine Draufsicht auf die Drosselplatte aus Figur 7;
- Figur 9:: eine Schnittansicht längs Linie 9-9 in Figur 8;
- Figur 10:: eine vergrößerte Ausschnittsansicht des Bereichs A aus Figur 9;
- Figur 11:: eine Schnittansicht längs Linie 11-11 in Figur 9;
- Figur 12:: eine vergrößerte Ausschnittsansicht des Bereichs B aus Figur 11;
- Figur 13:: eine schematische Darstellung einer Draufsicht ähnlich Figur 8 auf ein weiteres Ausführungsbeispiel einer Drosselplatte;
- Figur 14:: eine Ansicht des Ausführungsbeispiels der Drosselplatte aus Figur 13 von unten;
- Figur 15:: eine Darstellung der Abhängigkeit eines maximalen Drucks von der Frequenz für ein erstes Injektionselement für das Oxidationsmittel (durchgezogene Kurve) sowie für ein zugehöriges Resonatorelement in Form eines Helmholtz-Resonators (gestrichelte Kurve), welcher auf die zweite longitudinale Eigenfrequenz des Injektionselements abgestimmt ist;
- Figur 16:: eine schematische Darstellung eines Ausführungsbeispiels eines Raumfahrzeugs; und
- Figur 17:: eine schematische Darstellung eines Ausführungsbeispiels eines Luftfahrzeugs.

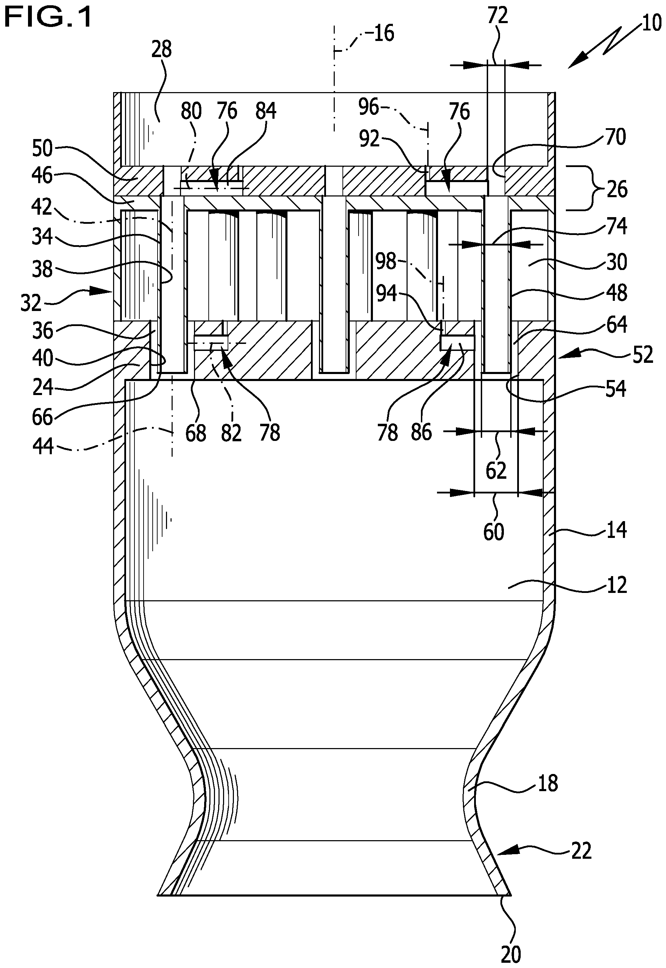

In Figur 1 ist schematisch ein erstes Ausführungsbeispiel einer Triebwerksvorrichtung 10 schematisch dargestellt.

Die Triebwerksvorrichtung 10 umfasst eine Brennkammer 12, die von einer Brennkammerwand 14 begrenzt ist.

Die Triebwerksvorrichtung 10 ist im Wesentlichen rotationssymmetrisch bezogen auf eine Längsachse 16 ausgebildet.

Die Brennkammer 12 ist im Wesentlichen hohlzylindrisch ausgebildet und verjüngt sich bis zu einer Einschnürung 18, ab welcher ein sich im Querschnitt erweiternder Auslass 20 ausgebildet ist. Die Einschnürung 18 definiert eine konvergente Düse 22 mit Schalldurchgang im engsten Querschnitt, der durch die Einschnürung 18 vorgegeben wird.

Dem Auslass 20 gegenüberliegend angeordnet ist eine die Brennkammer 12 begrenzende Stirnwand 24. Parallel zur Stirnwand 24 und von dieser beabstandet angeordnet ist eine zweite Trennwand 26, die auf einer von der Brennkammer 12 abgewandten Seite einen ersten Sammelraum 28 zum Aufnehmen eines fluidischen Oxidationsmittels 100 begrenzt. Die zweite Stirnwand 26 weist eine auf die Brennkammer 12 hin weisenden Seitenfläche auf, welche einen zweiten Sammelraum 30 zum Aufnehmen eines fluidischen Brennstoffs 102 begrenzt. Der zweite Sammelraum 30 wird zudem begrenzt durch die Stirnwand 24, und zwar mit einer Seitenfläche derselben, die von der Brennkammer 12 weg weist.

Zum Einleiten des fluidischen Brennstoffs und des fluidischen Oxidationsmittels in die Brennkammer 12 umfasst die Triebwerksvorrichtung 10 eine Injektorvorrichtung 32.

Die Injektorvorrichtung 32 definiert eine Injektorvorrichtungslängsachse auf, die mit der Längsachse 16 zusammenfällt. Ferner umfasst die Injektorvorrichtung 32 mehrere erste Injektionselemente 34 und mehrere zweite Injektionselemente 36. Die ersten Injektionselemente 34 sind in Form eines ersten Fluidkanals 38 ausgebildet zum fluidwirksamen Verbinden des ersten Sammelraums 28 und der Brennkammer 12. Die zweiten Injektionselemente 36 sind in Form zweiter Fluidkanäle 40 ausgebildet zum fluidwirksamen Verbinden des zweiten Sammelraums 30 und der Brennkammer 12.

Die ersten Injektionselemente 34 definieren erste Injektionselementlängsachsen 42. Die zweiten Injektionselemente 36 definieren zweite Injektionselementlängsachsen 44.

Die ersten Injektionselemente 34 sind an einem plattenförmigen Injektorelementhalter angeordnet und in Form einer Injektorhülse 48 ausgebildet. Der Injektorelementhalter 46 begrenzt den zweiten Sammelraum 30 und liegt mit einer zweiten Seitenfläche flächig an einer Injektorplatte 50 an.

Der Injektorelementhalter 46 und die Injektorplatte 50 bilden zusammen die Trennwand 26, die die Sammelräume 28 und 30 voneinander trennt.

Bei einem weiteren Ausführungsbeispiel sind der Injektorelementhalter 46 und die Injektorplatte 50 als eine einzige Einheit in einem Stück ausgebildet.

Die Stirnwand 24 bildet einen Einspritzkopf 52. Die zweiten Injektionselemente 36 sind an beziehungsweise im Einspritzkopf 52 angeordnet und ausgebildet.

Die zweiten Injektionselemente 36 sind in Form von Bohrungen 54 in der Stirnwand 24 ausgebildet. Bohrungslängsachsen derselben verlaufen parallel zur Längsachse 16.

Eine der Bohrungen 54 ist koaxial zur Längsachse 16 ausgebildet. Die weiteren Bohrungen 54 sind auf zwei zur Längsachse konzentrischen Kreisen 56 und 58 angeordnet.

Ein Innendurchmesser 60 der Bohrungen 54 ist etwas größer als ein Außendurchmesser 62 der Injektorhülse 48, sodass ein von der Bohrung 54 einerseits und der Injektorhülse 48 andererseits begrenzter Ringraum 64 ausgebildet wird, welcher den zweiten Fluidkanal 40 für den fluidischen Brennstoff 102 definiert.

Eine Länge der Injektorhülse 48 ist so gewählt, dass ein freies Ende 66 derselben im Bereich eines freien Endes 68 der Bohrungen 54, das auf die Brennkammer 12 hin weist, endet.

Die Injektorplatte 50 ist mit einer der Anzahl der Bohrungen 54 entsprechenden Anzahl von Bohrungen 70 versehen, deren Innendurchmesser 72 etwas kleiner ist als ein Innendurchmesser 74 der Injektorhülsen 48. Die Bohrungen 70 und 54 bilden somit einen sich einstufig im Übergangsbereich zwischen der Injektorplatte 50 und dem Injektorhalter 46 erweiternden ersten Fluidkanal 38.

Die Injektorvorrichtung 32 umfasst ferner mehrere erste Resonatorelemente 76 und mehrere zweite Resonatorelemente 78. Die ersten Resonatorelemente 76 sind jeweils einem ersten Injektionselement 34 zugeordnet, die zweiten Resonatorelemente 78 jeweils einem zweiten Injektionselement 36.

Die ersten Resonatorelemente 76 sind jeweils auf eine Eigenfrequenz des zugeordneten ersten Injektionselements 34 abgestimmt. Die zweiten Resonatorelemente 78 sind jeweils auf eine Eigenfrequenz des zugeordneten zweiten Injektionselements 36 abgestimmt.

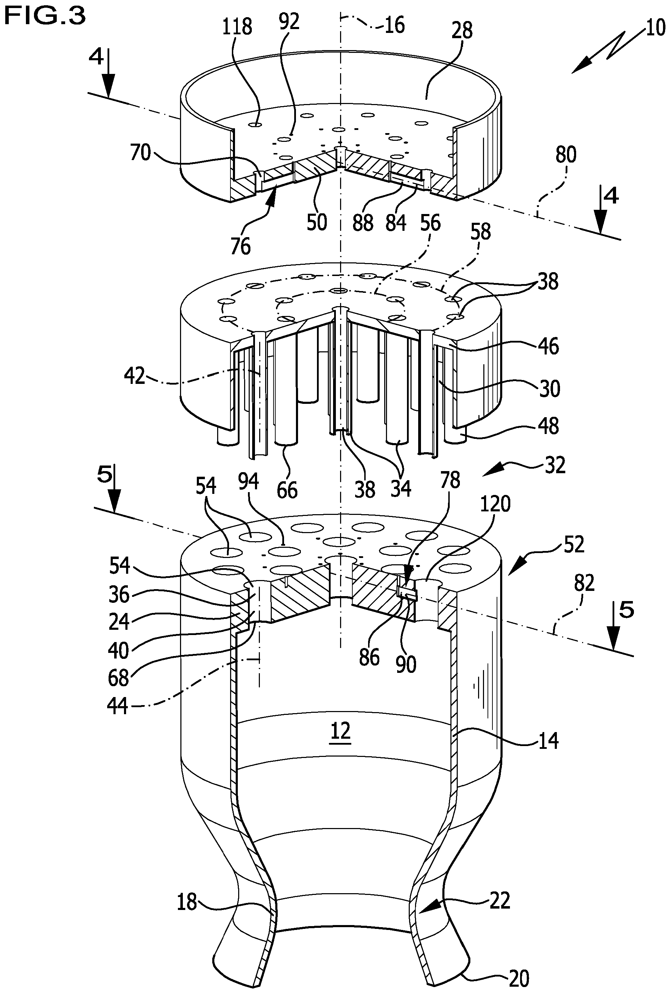

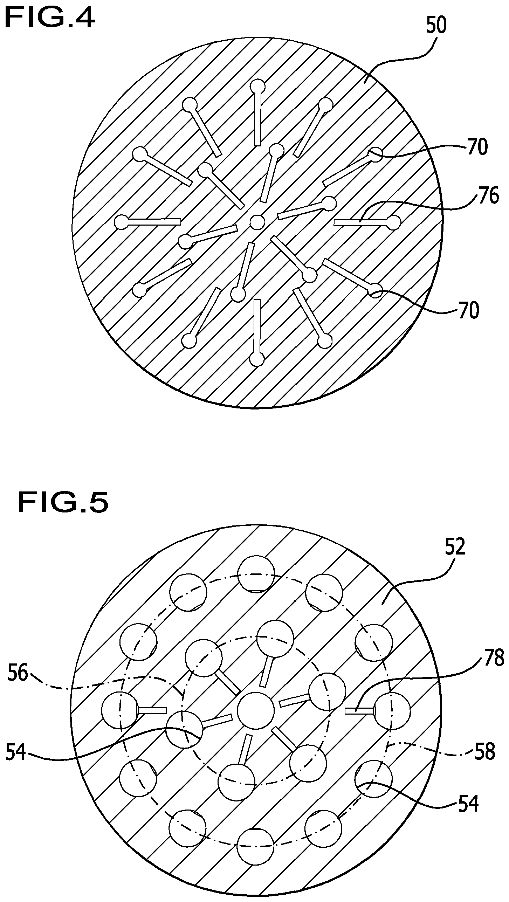

Bei dem in den Figuren 1 bis 5 dargestellten Ausführungsbeispiel der Injektorvorrichtung 32 definieren die ersten Resonatorelemente 76 erste Resonatorelementlängsachsen 80 und die zweiten Resonatorelemente 78 zweite Resonatorelementlängsachsen 82.

Die ersten Resonatorelementlängsachsen 80 spannen gemeinsam eine quer zur Längsachse 16 verlaufende Ebene auf, die parallel zu einer von den zweiten Resonatorelementlängsachsen 82 definierten Ebene verläuft.

Die ersten Injektionselementlängsachsen 42 und die ersten Resonatorelementlängsachsen 80 verlaufen quer, nämlich senkrecht, zueinander. Die zweiten Injektionselementlängsachsen 44 und die jeweils zugeordneten zweiten Resonatorelementlängsachsen 82 verlaufen ebenfalls quer, nämlich senkrecht, zueinander.

Die ersten Resonatorelemente 76 sind fluidwirksam mit dem zugeordneten ersten Injektionselement 34 fluidwirksam verbunden. Ebenso sind die zweiten Resonatorelemente 78 fluidwirksam mit dem jeweils zugeordneten zweiten Injektionselement 36 verbunden.

Die ersten Resonatorelemente 76 definieren jeweils einen ersten Resonatorhohlraum 84, welcher ein erstes Resonatorvolumen definiert. Die zweiten Resonatorelemente 78 definieren jeweils einen zweiten Resonatorhohlraum 86.

Bei dem in den Figuren 1 bis 5 schematisch dargestellten Ausführungsbeispiel der Injektorvorrichtung 32 münden die ersten und zweiten Resonatorelemente 76 beziehungsweise 78 jeweils direkt in die Bohrung 70 beziehungsweise in die Bohrung 54.

Der erste Resonatorhohlraum 84 und der zweite Resonatorhohlraum 86 sind bei dem in den Figuren 1 bis 5 dargestellten Ausführungsbeispiel der Injektorvorrichtung 32 in Form hohler Quader 88 beziehungsweise 90 ausgebildet. Grundsätzlich können sie eine beliebige Form aufweisen. Bei anderen Ausführungsbeispielen sind sie in Form hohler Zylinder oder in Form von Hohlkugeln ausgebildet.

Ferner sind die ersten Resonatorelemente 76 und der erste Sammelraum 28 über erste Spülkanäle 92 fluidwirksam miteinander verbunden. Ferner sind auch die zweiten Resonatorelemente 78 und der zweite Sammelraum 30 jeweils über einen zweiten Spülkanal 94 fluidwirksam miteinander verbunden.

Der erste Spülkanal 92 definiert eine erste Spülkanallängsachse 96. Der zweite Spülkanal 94 definiert eine zweite Spülkanallängsachse 98.

Die erste Spülkanallängsachse 96 und die Längsachse 16 verlaufen parallel oder im Wesentlichen parallel zueinander. Die zweite Spülkanallängsachse 98 und die Längsachse 16 verlaufen ebenfalls parallel oder im Wesentlichen parallel zueinander.

Bei dem in den Figuren 1 bis 5 dargestellten Ausführungsbeispiel der Injektorvorrichtung 32 sind die ersten Resonatorelemente 76 jeweils einem ersten Injektionselement 34 zugeordnet. Die zweiten Resonatorelemente 78 sind jeweils einem zweiten Injektionselement 36 zugeordnet.

Insgesamt umfasst das beschriebene Ausführungsbeispiel der Injektorvorrichtung 32 jeweils neunzehn erste und zweite Injektionselemente 34, 36, mithin also jeweils eine Mehrzahl erster und zweiter Injektionselemente 34, 36.

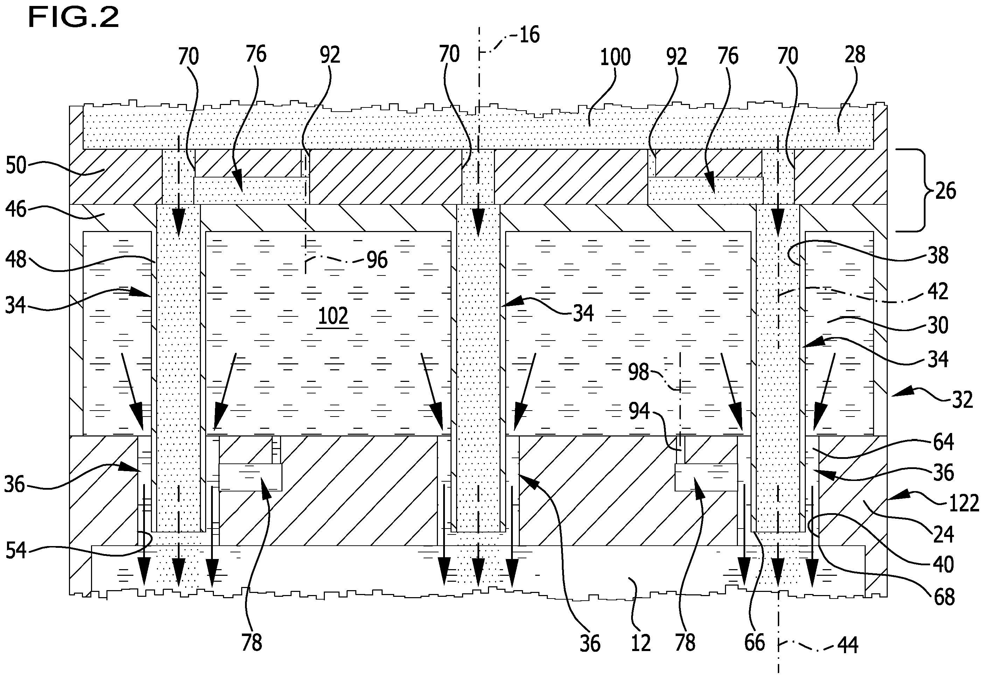

Wie schematisch in Figur 2 dargestellt, strömt das fluidische Oxidationsmittel 100 aus dem ersten Sammelraum 28 durch die eine Drossel bildende Bohrung 70 in die Injektorhülse 48, tritt an deren Ende 66 aus und strömt in die Brennkammer 12. Der fluidische Brennstoff 102 strömt aus dem zweiten Sammelraum 30 durch die Ringräume 64 in die Brennkammer 12 und vermischt sich beim Austritt aus den zweiten Injektionselementen 36 mit dem fluidischen Oxidationsmittel 100.

Das fluidische Oxidationsmittel 100 kann zudem durch die ersten Spülkanäle 92 in die ersten Resonatorelemente 76 strömen. Dadurch sind die Bedingungen, die im ersten Injektionselement 34 sowie im ersten Resonatorelement 76 herrschen, jeweils identisch.

Der fluidische Brennstoff 102 strömt durch die zweiten Spülkanäle 94 in die zweiten Resonatorelemente 78, sodass auch hier die Bedingungen im fluidischen Brennstoff 102 sowohl im zweiten Resonatorelement 78 als auch im zweiten Injektionselement 36 identisch sind.

Wie bereits oben beschrieben, kann eine Abstimmung der jeweiligen Resonatorelemente 76, 78 auf Eigenfrequenzen der Injektionselemente 34, 36 unabhängig von Betriebsbedingungen der Triebwerksvorrichtung 10 erfolgen.

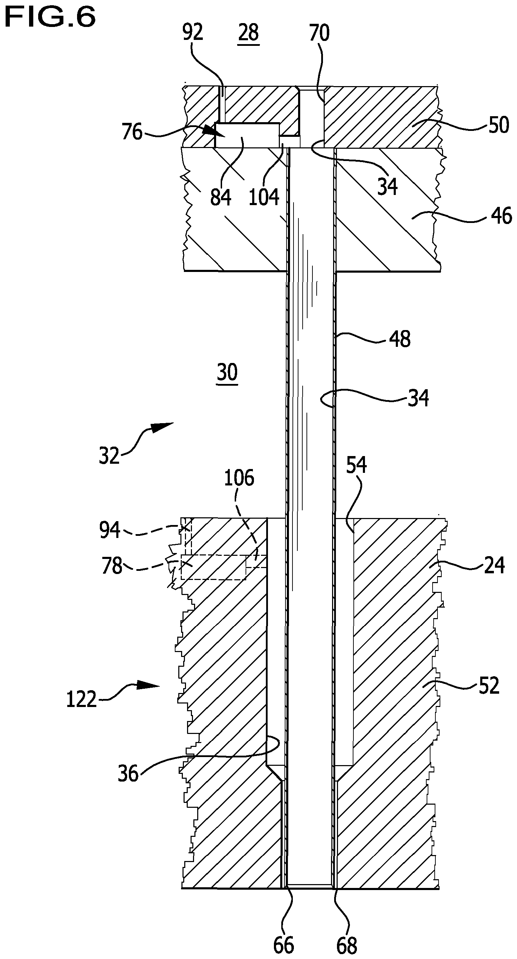

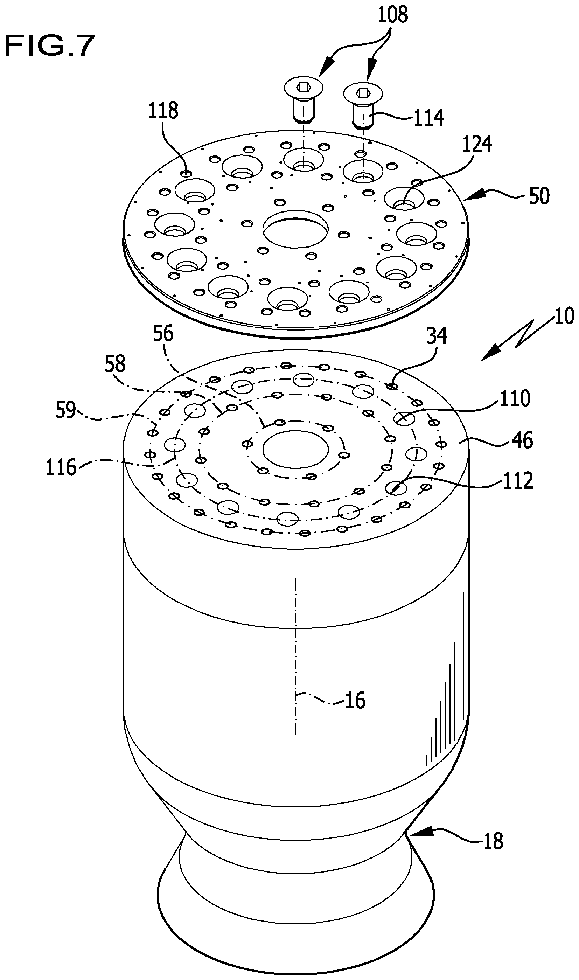

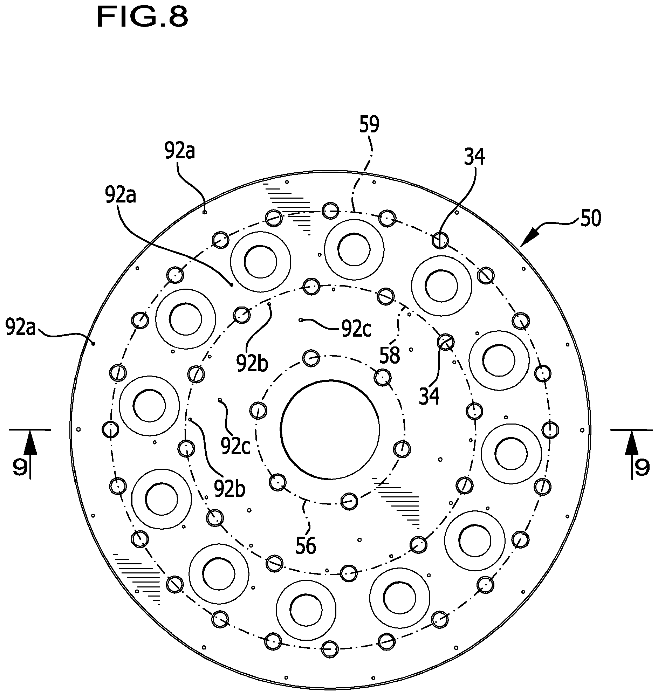

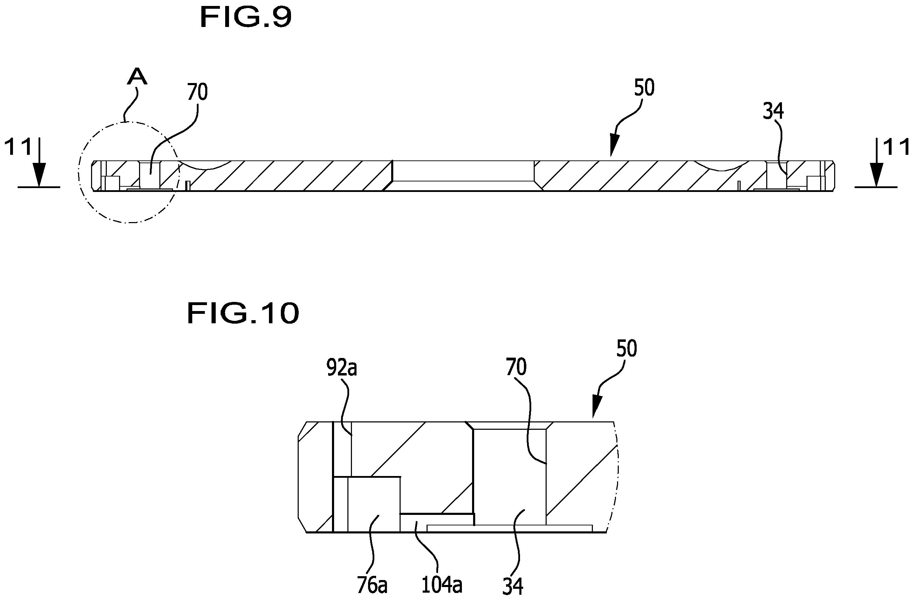

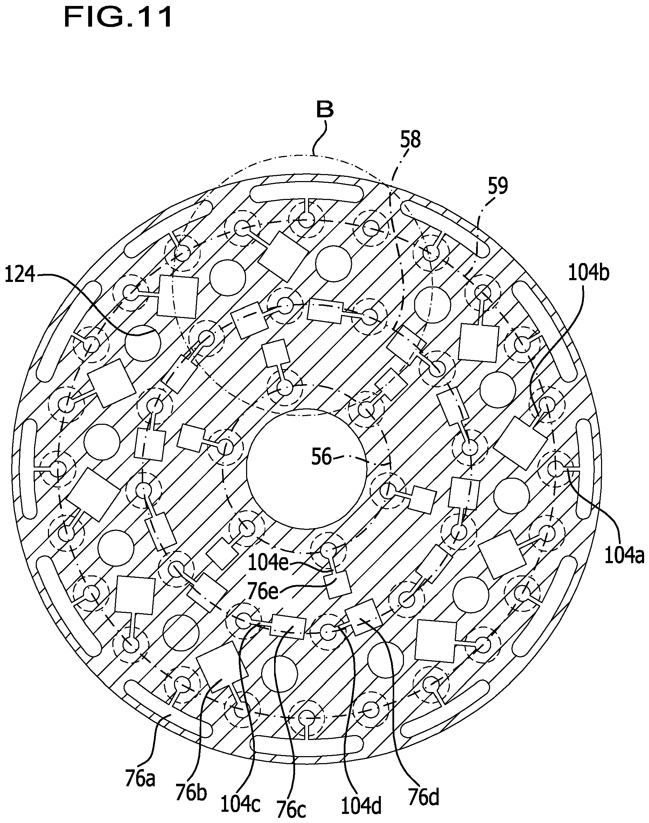

Die Figuren 6 bis 12 zeigen schematisch ein weiteres Ausführungsbeispiel einer Triebwerksvorrichtung 10. Identische Elemente und Komponenten des in den Figuren 6 bis 12 dargestellten Ausführungsbeispiels der Triebwerksvorrichtung 10 sind mit denselben Bezugszeichen versehen, die zur Bezeichnung von Elementen und Komponenten der in den Figuren 1 bis 5 schematisch dargestellten Triebwerksvorrichtung 10 dienen.

Figur 6 zeigt schematisch eine Längsschnittansicht der Triebwerksvorrichtung 10 im Bereich der Injektorvorrichtung 32. Das in Figur 6 dargestellte Ausführungsbeispiel der Injektorvorrichtung 32 unterscheidet sich von der Injektorvorrichtung 32 des in den Figuren 1 bis 5 dargestellten Ausführungsbeispiels insbesondere dadurch, dass die ersten Resonatorelemente 76 nicht direkt in die zugeordnete Bohrung 70 münden, sondern mit dieser über einen ersten Resonatorkanal 104 fluidwirksam verbunden sind.

Des Weiteren ist das zweite Injektionselement 36 wiederum durch die Bohrung 54 im Einspritzkopf 52 ausgebildet, wobei sich die Bohrung 54 ausgehend vom zweiten Sammelraum 30 nach etwa zwei Drittel ihrer Länge einstufig im Innendurchmesser verjüngt, wodurch eine Drossel in der Stirnwand 24 ausgebildet wird.

Bei dem in den Figuren 6 bis 12 dargestellten Ausführungsbeispiel der Injektorvorrichtung 32 sind keine zweiten Resonatorelemente 78 vorgesehen. Bei einem weiteren, nicht dargestellten Ausführungsbeispiel der Triebwerksvorrichtung 10, die im Übrigen identisch mit der Triebwerksvorrichtung 10 gemäß der Figuren 6 bis 12 ausgebildet ist, sind zweite Resonatorkanäle 106 vorgesehen, die die zweiten Resonatorelemente 78 und die zugeordneten zweiten Injektionselemente 36 fluidwirksam miteinander verbinden. In Figur 6 ist zur Veranschaulichung ein optionales zweites Resonatorelement 78 beispielhaft gestrichelt eingezeichnet, das über den zugeordneten zweiten Resonatorkanal 106, ebenfalls gestrichelt eingezeichnet, mit dem zweiten Injektionselement 36 fluidwirksam verbunden ist. Das zweite Resonatorelement 78 kann, wie in Figur 6 gestrichelt dargestellt, ferner über den optionalen Spülkanal 94 mit dem zweiten Sammelraum 30 fluidwirksam verbunden sein.

Der erste Resonatorkanal 104 definiert ein erstes Resonatorkanalvolumen, welches kleiner ist als das erste Resonatorvolumen. Ferner definiert der zweite Resonatorkanal 106 ein zweites Resonatorkanalvolumen, welches kleiner ist als das zweite Resonatorvolumen.

Ferner definiert bei einem Ausführungsbeispiel der Triebwerksvorrichtung 10 der erste Spülkanal 92 eine erste Spülkanalquerschnittsfläche, welche kleiner ist als eine vom ersten Resonatorkanal 104 definierte erste Resonatorkanalquerschnittsfläche.

Bei einem Ausführungsbeispiel der Triebwerksvorrichtung 10 ist eine vom zweiten Spülkanal 94 definierte zweite Spülkanalquerschnittsfläche kleiner als eine vom zweiten Resonatorkanal 106 definierte zweite Resonatorkanalquerschnittsfläche.

Die ersten Resonatorelemente 76 und die zweiten Resonatorelemente 78 der beschriebenen Ausführungsbeispiele von Triebwerksvorrichtungen 10 sind in Form von Helmholtz-Resonatoren ausgebildet.

Bei anderen Ausführungsbeispielen von Triebwerksvorrichtungen 10 sind sie in Form von λ/4-Resonatoren ausgebildet.

Bei weiteren Ausführungsbeispielen von Triebwerksvorrichtungen 10 können die ersten und zweiten Resonatorelemente 76, 78 teilweise in Form von Helmholtz-Resonatoren und teilweise in Form von λ/4-Resonatoren ausgebildet sein.

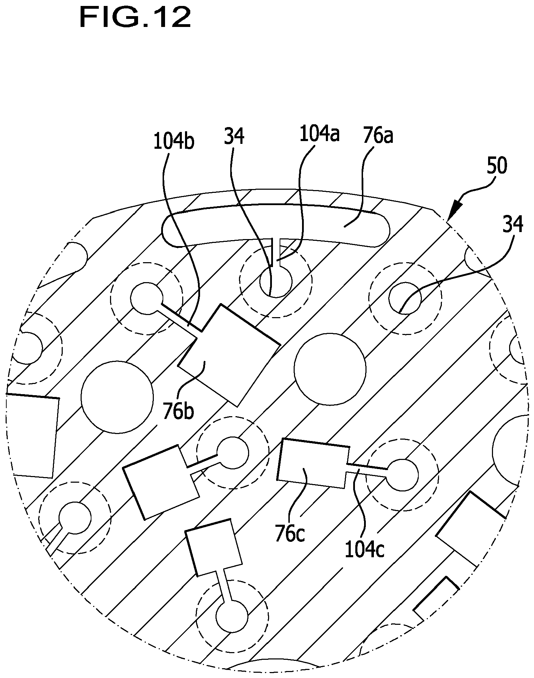

Die ersten Resonatorelemente 76 weisen bei einem Ausführungsbeispiel einer Injektorvorrichtung 32 unterschiedliche Formen auf. So sind bei dem in den Figuren 6 bis 12 dargestellten Ausführungsbeispiel insgesamt 42 erste Injektionselemente 34 ausgebildet, von denen 24 auf einem äußeren Kreis 59 angeordnet sind, 12 auf einem mittleren Kreis 58 sowie sechs auf einem inneren Kreis 56. In Figur 12 sind die in der Injektorplatte 50, die auch als Drosselplatte bezeichnet werden kann, erste Resonatorelemente 76a, 76b, 76c, 76d und 76e ausgebildet, wobei den ersten Injektionselementen 34 des Kreises 59 ein erstes Resonatorelement 76a oder 76b zugeordnet ist, jedem ersten Injektionselement 34 des zweiten Kreises 58 ein erstes Resonatorelement 76c oder 76d und jedem ersten Injektionselement 34 des dritten Kreises 56 ein erstes Resonatorelement 76e.

Die Resonatorelemente 76a, 76b, 76c, 76d und 76e weisen demnach unterschiedliche Formen und unterschiedliche erste Resonatorvolumina auf.

Durch die unterschiedliche Ausgestaltung der ersten Resonatorelemente 76a, 76b, 76c, 76d und 76e sind diese auf unterschiedliche Eigenfrequenzen der ihnen jeweils zugeordneten ersten Injektionselemente 34 abgestimmt. Bei dem in den Figuren 6 bis 12 dargestellten Ausführungsbeispiel der Injektorvorrichtung 32 sind die ersten Resonatorelemente 76a und 76b auf eine zweite Eigenmode (2L) der ersten Injektionselemente 34 abgestimmt, die mit einer ersten tangentialen Mode der Brennkammer 12 bei etwa 10 kHz koppelt.

Die ersten Resonatorelemente 76c und 76d dagegen sind auf die dritte Eigenmode (3L) der ersten Injektionselemente 34 abgestimmt, die mit einer zweiten tangentialen Mode der Brennkammer 12 bei etwa 15 kHz koppelt.

Die ersten Resonatorelemente 76e sind auf die vierte Eigenmode (4L) der ersten Injektionselemente 34 abgestimmt, welche mit einer ersten radialen Mode der Brennkammer 12 bei etwa 20 kHz koppelt.

Die ersten Resonatorelemente 76a, 76b, 76c, 76d und 76e sind jeweils über Spülkanäle 92a, 92b und 92c mit dem ersten Sammelraum 28 fluidwirksam verbunden.

Die Injektorplatte 50 ist mit Schrauben 108 mit dem Injektorelementhalter 46 verschraubt. Im Injektorelementhalter 46 sind mit einem Innengewinde 110 versehene Sacklöcher 112 ausgebildet. Die Innengewinde 110 korrespondieren zu Außengewinden 114 der Schrauben 108.

In der Injektorplatte 50 sind zudem Bohrungen 124 mit Rücksprüngen ausgebildet, die von dem mit dem Außengewinde 114 versehenen Teil der Schrauben 108 durchsetzt werden.

Die Sacklöcher 112 sind ringförmig auf einem Kreis 116 angeordnet, der zwischen den Kreisen 58 und 59 konzentrisch zur Längsachse 16 ausgebildet ist.

Die ersten Resonatorelemente 76a und 76b, die mit den ersten Injektionselementen 34 des äußersten Kreises 59 fluidwirksam verbunden sind, unterscheiden sich zwar in Ihrer Form, jedoch nicht in ihrer Abstimmung auf die bestimmte Eigenfrequenz des ersten Injektionselements 34 des äußersten Kreises 59.

Auch die ersten Resonatorelemente 76c und 76d unterscheiden sich in ihrer Form etwas voneinander. Allerdings sind auch diese jeweils auf dieselbe Eigenfrequenz des ersten Injektionselements 34 des mittleren Kreises 58.

Die unterschiedliche Ausgestaltung der ersten Resonatorelemente 76a und 76b beziehungsweise 76c und 76d beruht auf der begrenzten räumlichen Situation, die es nicht ermöglicht, nur drei verschiedene erste Resonatorelemente 76 vorzusehen.

Die ersten Resonatorelemente 76 sind jeweils im Bereich eines in Richtung auf den ersten Sammelraum 28 weisenden Einlasses 118 des ersten Injektionselements 34 angeordnet oder ausgebildet.

Die zweiten Resonatorelemente 78 sind im Bereich eines in Richtung auf den zweiten Sammelraum 30 weisenden Einlasses 120 des zweiten Injektionselements 36 angeordnet oder ausgebildet.

Bei den beschriebenen Ausführungsbeispielen von Injektorvorrichtungen 32 sind die ersten Resonatorelemente 76 in der Injektorplatte 50 angeordnet oder ausgebildet. Die zweiten Resonatorelemente 78 sind in der Stirnwand 24, die eine zweite Injektorplatte 122 bildet, angeordnet oder ausgebildet. Die Injektorplatten 50 und 122 sind parallel zueinander angeordnet oder ausgebildet und erstrecken sich quer, nämlich senkrecht, zur Längsachse 16.

Die Injektorplatte 50 ist in Form einer Drosselplatte ausgebildet. Wie beschrieben bildet die Bohrung 70 im Bereich des Einlasses 118 des ersten Injektionselements 34 ein erstes Drosselelement, welches einen kleineren Strömungsquerschnitt als der verbleibende Teil des ersten Injektionselements 34 definiert.

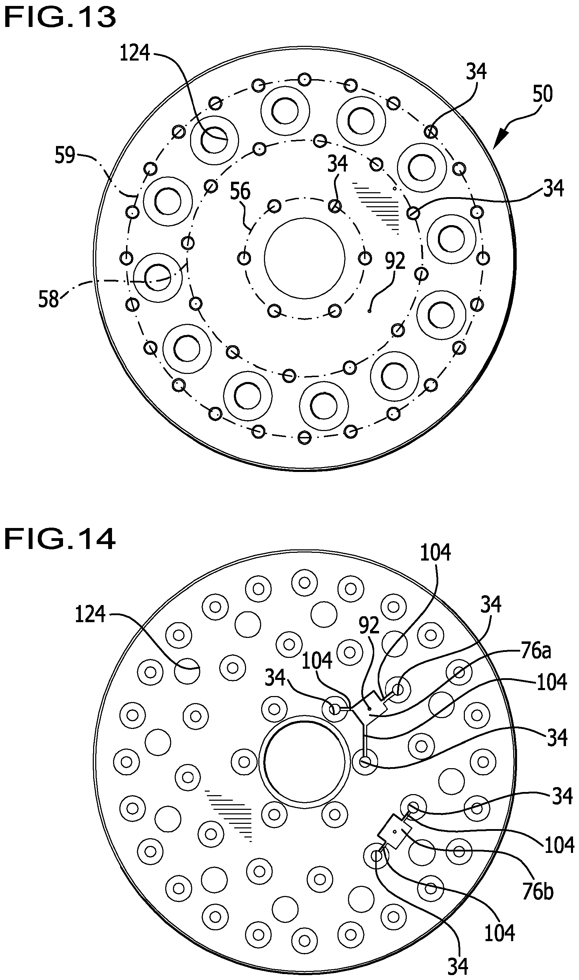

Ein weiteres Ausführungsbeispiel einer Injektorplatte 50 ist schematisch in den Figuren 13 und 14 dargestellt.

Bei dem Ausführungsbeispiel der Injektorplatte 50 der Figuren 13 und 14 sind schematisch zwei erste Resonatorelemente 76a und 76b eingezeichnet. Das Resonatorelement 76a ist über drei erste Resonatorkanäle 104 mit insgesamt drei ersten Injektionselementen 34 fluidwirksam verbunden. Ferner ist das erste Resonatorelement 76a über einen Spülkanal 92 mit dem ersten Sammelraum 28 fluidwirksam verbunden.

Das in Figur 14 schematisch dargestellte erste Resonatorelement 76b ist über zwei erste Resonatorkanäle 104 fluidwirksam mit zwei ersten Injektionselementen 34 verbunden.

Grundsätzlich können erste und zweite Resonatorelemente 76 und 78 bei Ausführungsbeispielen nur einem Injektionselement 34 zugeordnet sein. Bei anderen Ausführungsbeispielen von Injektorvorrichtungen 32 können erste Resonatorelemente 76 und zweite Resonatorelemente 78 auch zwei, drei oder mehr ersten beziehungsweise zweiten Injektionskanälen 34, 36 zugeordnet sein. Auf diese Weise lassen sich sehr kompakte Injektorplatten 50 ausbilden.

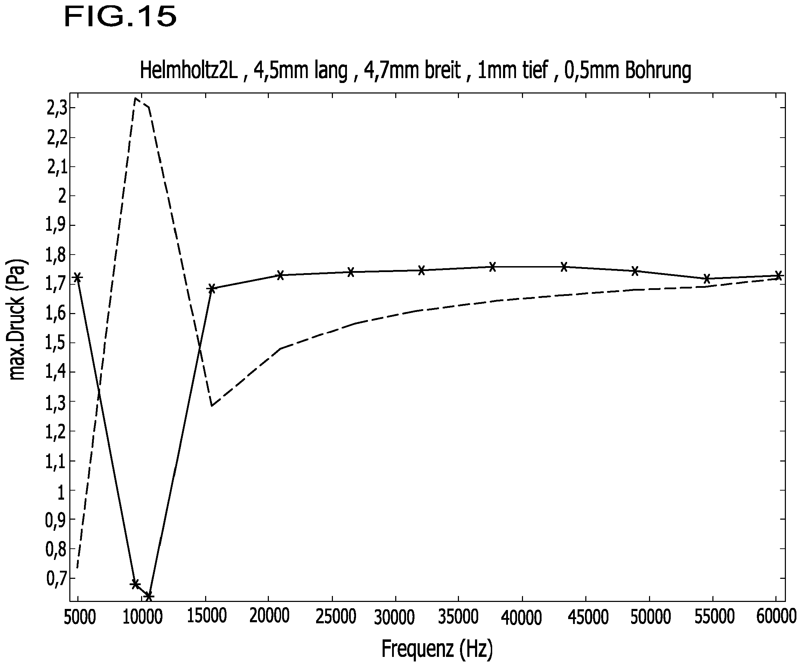

In Figur 15 ist schematisch der maximale Druck im ersten Injektionselement 34 und im zugehörigen ersten Resonatorelement 76 bei den jeweiligen Eigenfrequenzen der Gesamtgeometrie der Injektionselemente 34 dargestellt. Anhand dieser Druckverteilung ist eindeutig zu erkennen, dass eine Druckspitze bei der zweiten Eigenmode des ersten Injektionselements 34 erreicht wird und gleichzeitig ein breiter Frequenzbereich des ersten Injektionselements 34 gedämpft wird.

Die Trennwand 26 der Triebwerksvorrichtung 10 ist thermisch weniger belastet als die Brennkammerwand 14. Dies ermöglicht es, die Injektorplatte 50 aus nichtrostendem Edelstahl oder Nickelbasislegierungen auszubilden.

Die Injektorplatte 50 ist bei einem Ausführungsbeispiel durch ein additives Fertigungsverfahren ausgebildet. Insbesondere kann hier selektives Laserschmelzen eingesetzt werden. Dies ermöglicht hochkomplexe Strukturen der Injektorplatte, insbesondere zur Ausbildung der ersten Resonatorelemente 76.

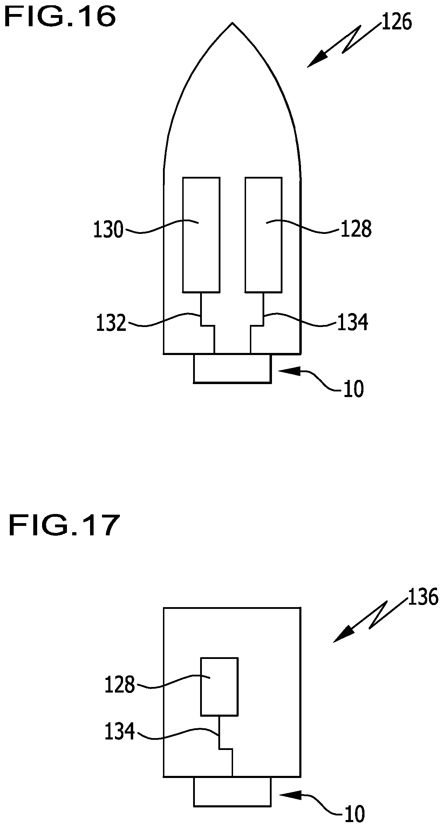

In Figur 16 ist schematisch ein Ausführungsbeispiel eines Raumfahrzeugs 126 abgebildet. Es umfasst eine der oben beschriebenen Triebwerksvorrichtung 10 sowie einen Brennstofftank 128 zum Aufnehmen eines fluidischen, insbesondere flüssigen, Brennstoffs 102 und einen Oxidationsmitteltank 130 zum Aufnehmen eines fluidischen, insbesondere flüssigen, Oxidationsmittels 100. Das Oxidationsmittel 100 kann insbesondere flüssiger Sauerstoff sein.

Der Brennstofftank 128 ist ausgebildet zum Aufnehmen eines fluidischen Brennstoffs, beispielsweise einem flüssigen Brennstoff in Form von Wasserstoff oder Methan.

Der Oxidationsmitteltank 130 ist fluidwirksam mit dem ersten Sammelraum 28 über eine Fluidleitung 132 verbunden. Über eine weitere Fluidleitung 134 ist der Brennstofftank 128 mit dem zweiten Sammelraum 30 verbunden.

Figur 17 zeigt schematisch ein Ausführungsbeispiel eines Luftfahrzeugs 136. Es umfasst einen Brennstofftank 128 sowie eine Triebwerksvorrichtung 10, die über eine Fluidleitung 134 fluidwirksam mit dem Brennstofftank 128 verbunden ist.

Bei dem Luftfahrzeug 136 ist nicht zwingend ein Oxidationsmitteltank erforderlich, wenn sich das Luftfahrzeug 136 in Bereichen der Atmosphäre bewegt, in denen ausreichend Luftsauerstoff zur Verfügung steht, um als Oxidationsmittel für das Luftfahrzeug 136 im Brennstofftank 128 mitgeführten Brennstoff 102 dienen zu können.

### Bezugszeichenliste

- 10: Triebwerksvorrichtung
- 12: Brennkammer
- 14: Brennkammerwand
- 16: Längsachse
- 18: Einschnürung
- 20: Auslass
- 22: Düse
- 24: Stirnwand
- 26: Trennwand
- 28: erster Sammelraum
- 30: zweiter Sammelraum
- 32: Injektorvorrichtung
- 34: erstes Injektionselement
- 36: zweites Injektionselement
- 38: erster Fluidkanal
- 40: zweiter Fluidkanal
- 42: erste Injektionselementlängsachse
- 44: zweite Injektionselementlängsachse
- 46: Injektionselementhalter
- 48: Injektorhülse
- 50: Injektorplatte
- 52: Einspritzkopf
- 54: Bohrung
- 56: Kreis
- 58: Kreis
- 59: Kreis
- 60: Innendurchmesser
- 62: Außendurchmesser
- 64: Ringraum
- 66: Ende
- 68: Ende
- 70: Bohrung
- 72: Innendurchmesser
- 74: Innendurchmesser
- 76, 76a, 76b, 76c, 76d, 76e: erstes Resonatorelement
- 78: zweites Resonatorelement
- 80: erste Resonatorelementlängsachse
- 82: zweite Resonatorelementlängsachse
- 84: erster Resonatorhohlraum
- 86: zweiter Resonatorhohlraum
- 88: Quader
- 90: Quader
- 92, 92a, 92b, 92c: erster Spülkanal
- 94: zweiter Spülkanal
- 96: erste Spülkanallängsachse
- 98: zweite Spülkanallängsachse
- 100: Oxidationsmittel
- 102: Brennstoff
- 104, 104a, 104b, 104c, 104d, 104e: erster Resonatorkanal
- 106: zweiter Resonatorkanal
- 108: Schrauben
- 110: Innengewinde
- 112: Sackloch
- 114: Außengewinde
- 116: Kreis
- 118: Einlass
- 120: Einlass
- 122: zweite Injektorplatte
- 124: Bohrung
- 126: Raumfahrzeug
- 128: Brennstofftank
- 130: Oxidationsmitteltank
- 132: Fluidleitung
- 134: Fluidleitung
- 136: Luftfahrzeug

## Patentansprüche

1. Injektorvorrichtung (32) für eine Triebwerksvorrichtung (10) zum Einleiten eines fluidischen, insbesondere flüssigen, Brennstoffs (102) und eines fluidischen, insbesondere flüssigen, Oxidationsmittels (100) in eine Brennkammer (12) der Triebwerksvorrichtung (10), welche Injektorvorrichtung (32) eine Längsachse (16) definiert und mindestens ein erstes Injektionselement (34) umfasst, welches in Form eines ersten Fluidkanals (38) ausgebildet ist zum fluidwirksamen Verbinden eines ersten Sammelraums (28) für das fluidische Oxidationsmittel (100) und der Brennkammer (12), und mindestens ein zweites Injektionselement (36), welches in Form eines zweiten Fluidkanals (40) ausgebildet ist zum fluidwirksamen Verbinden eines zweiten Sammelraums (30) für den fluidischen Brennstoff (102) und der Brennkammer (12), wobei dem mindestens einen ersten Injektionselement (34) mindestens ein erstes Resonatorelement (76, 76a, 76b, 76c, 76d, 76e) zugeordnet ist und/oder wobei dem mindestens einen zweiten Injektionselement (36) mindestens ein zweites Resonatorelement (78) zugeordnet ist und wobei das mindestens eine erste Resonatorelement (76, 76a, 76b, 76c, 76d, 76e) auf eine Eigenfrequenz des zugeordneten mindestens einen ersten Injektionselements (34) abgestimmt ist und/oder wobei das mindestens eine zweite Resonatorelement (78) auf eine Eigenfrequenz des zugeordneten mindestens einen zweiten Injektionselements (36) abgestimmt ist, **dadurch gekennzeichnet, dass** das mindestens eine erste Resonatorelement (76, 76a, 76b, 76c, 76d, 76e) und der erste Sammelraum (28) über einen ersten Spülkanal (92) fluidwirksam miteinander verbunden sind und/oder dass das mindestens eine zweite Resonatorelement (78) und der zweite Sammelraum (30) über einen zweiten Spülkanal (94) fluidwirksam miteinander verbunden sind, sodass durch das jeweilige Resonatorelement (76, 76a, 76b, 76c, 76d, 76e; 78) das durch die Injektionselemente (34, 36) strömende Fluid ebenfalls mit einer geringen Strömungsgeschwindigkeit strömt, wodurch sichergestellt werden kann, dass im jeweiligen Resonatorelement (76, 76a, 76b, 76c, 76d, 76e; 78) zu jedem Zeitpunkt dieselben Bedingungen herrschen wie in dem zu dämpfenden Injektionselement (34, 36).

2. Injektorvorrichtung nach Anspruch 1, **dadurch gekennzeichnet, dass** das mindestens eine erste Resonatorelement (76, 76a, 76b, 76c, 76d, 76e) fluidwirksam mit dem mindestens eine ersten Injektionselement (34) verbunden ist und/oder dass das mindestens eine zweite Resonatorelement (78) fluidwirksam mit dem mindestens einen zweiten Injektionselement (36) verbunden ist.

3. Injektorvorrichtung nach einem der voranstehenden Ansprüche, **dadurch gekennzeichnet, dass** das mindestens eine erste Resonatorelement (76, 76a, 76b, 76c, 76d, 76e) einen ersten Resonatorhohlraum (84) umfasst, welcher ein erstes Resonatorvolumen definiert, und dass ein erster Resonatorkanal (104, 104a, 104b, 104c, 104d, 104e) das mindestens eine erste Injektionselement (34) und den ersten Resonatorhohlraum (84) fluidwirksam verbindet und/oder dass das mindestens eine zweite Resonatorelement (78) einen zweiten Resonatorhohlraum (86) umfasst, welcher ein zweites Resonatorvolumen definiert, und dass ein zweiter Resonatorkanal (106) das mindestens eine zweite Injektionselement (36) und den zweiten Resonatorhohlraum (86) fluidwirksam verbindet, wobei insbesondere
a) der erste Resonatorkanal (104, 104a, 104b, 104c, 104d, 104e) ein erstes Resonatorkanalvolumen definiert und wobei das erste Resonatorkanalvolumen kleiner ist als das erste Resonatorvolumen und/oder wobei der zweite Resonatorkanal (106) ein zweites Resonatorkanalvolumen definiert und wobei das zweite Resonatorkanalvolumen kleiner ist als das zweite Resonatorvolumen
und/oder
b) der erste Resonatorhohlraum (84) und/oder der zweite Resonatorhohlraum (86) in Form eines hohlen Zylinders, eines hohlen Quaders (88, 90) oder einer Hohlkugel.

4. Injektorvorrichtung nach einem der voranstehenden Ansprüche, **dadurch gekennzeichnet, dass**
a) das mindestens eine erste Injektionselement (34) eine erste Injektionselementlängsachse (42) definiert und/oder dass das mindestens eine zweite Injektionselement (36) eine zweite Injektionselementlängsachse (44) definiert
und/oder
b) das mindestens eine erste Resonatorelement (76, 76a, 76b, 76c, 76d, 76e) eine erste Resonatorelementlängsachse (80) definiert und/oder dass das mindestens eine zweite Resonatorelement (78) eine zweite Resonatorelementlängsachse (82) definiert
und/oder
c) das mindestens eine erste Injektionselement (34) und das mindestens eine zweite Injektionselement (36) koaxial zueinander angeordnet oder ausgebildet sind
und/oder
d) der mindestens eine erste Spülkanal (92) eine erste Spülkanallängsachse (96) definiert und/oder dass der mindestens eine zweite Spülkanal (94) eine zweite Spülkanallängsachse (98) definiert.

5. Injektorvorrichtung nach einem der voranstehenden Ansprüche, **dadurch gekennzeichnet, dass** eine vom mindestens einen ersten Spülkanal (92) definierte erste Spülkanalquerschnittsfläche kleiner ist als eine vom ersten Resonatorkanal (104, 104a, 104b, 104c, 104d, 104e) definierte erste Resonatorkanalquerschnittsfläche und/oder dass eine vom mindestens einen zweiten Spülkanal (92) definierte zweite Spülkanalquerschnittsfläche kleiner ist als eine vom zweiten Resonatorkanal (106) definierte zweite Resonatorkanalquerschnittsfläche.

6. Injektorvorrichtung nach einem der voranstehenden Ansprüche, **dadurch gekennzeichnet, dass**
a) das mindestens eine erste Resonatorelement (76, 76a, 76b, 76c, 76d, 76e) und/oder dass das mindestens eine zweite Resonatorelement (78) in Form eines Helmholtz-Resonators oder in Form eines λ/4-Resonators ausgebildet ist
und/oder
b) das mindestens eine erste Resonatorelement (76, 76a, 76b, 76c, 76d, 76e) mindestens einem ersten Injektionselement (34) zugeordnet ist und/oder dass das mindestens eine zweite Resonatorelement (78) mindestens einem zweiten Injektionselement (36) zugeordnet ist.

7. Injektorvorrichtung nach einem der voranstehenden Ansprüche, **dadurch gekennzeichnet, dass** die Injektorvorrichtung (32) eine Mehrzahl erster Injektionselemente (34) und/oder eine Mehrzahl zweiter Injektionselemente (36) umfasst.

8. Injektorvorrichtung nach einem der voranstehenden Ansprüche, **dadurch gekennzeichnet, dass** das mindestens eine erste Resonatorelement (76, 76a, 76b, 76c, 76d, 76e) im Bereich eines in Richtung auf den ersten Sammelraum (28) weisenden Einlasses (118) des mindestens einen ersten Injektionselements (34) angeordnet oder ausgebildet ist und/oder dass das mindestens eine zweite Resonatorelement (78) im Bereich eines in Richtung auf den zweiten Sammelraum (30) weisenden Einlasses (120) des mindestens einen zweiten Injektionselements (36) angeordnet oder ausgebildet ist.

9. Injektorvorrichtung nach einem der voranstehenden Ansprüche, **dadurch gekennzeichnet, dass** die Injektorvorrichtung (32) eine erste Injektorplatte (50) und eine zweite Injektorplatte (26) umfasst, dass die mindestens einen ersten Resonatorelemente (76, 76a, 76b, 76c, 76d, 76e) in der ersten Injektorplatte (50) angeordnet oder ausgebildet sind und/oder dass die mindestens einen zweiten Resonatorelemente (78) in der zweiten Injektorplatte (122) angeordnet oder ausgebildet sind.

10. Injektorvorrichtung nach einem der voranstehenden Ansprüche, **dadurch gekennzeichnet, dass** das mindestens eine erste Injektionselement (34) an einem plattenförmigen Injektorelementhalter (46) angeordnet und in Form einer Injektorhülse (48) ausgebildet ist.

11. Injektorvorrichtung nach einem der voranstehenden Ansprüche, **dadurch gekennzeichnet, dass** das mindestens eine zweite Injektionselement (36) an oder in einem Einspritzkopf (52) angeordnet oder ausgebildet ist.

12. Injektorvorrichtung nach einem der voranstehenden Ansprüche, **dadurch gekennzeichnet, dass** sich das mindestens eine zweite Injektionselement (36) im Querschnitt zur Ausbildung eines zweiten Drosselelements einstufig verjüngt.

13. Triebwerksvorrichtung (10), insbesondere für ein Luftfahrzeug (136) und/oder ein Raumfahrzeug (126), welche Triebwerksvorrichtung (10) eine Brennkammer (12) mit einer Düse (22) und eine der Düse (22) gegenüberliegend angeordnete Injektorvorrichtung (32) umfasst, **dadurch gekennzeichnet, dass** die Injektorvorrichtung (32) nach einem der voranstehenden Ansprüche ausgebildet ist.

14. Luft- und/oder Raumfahrzeug (136, 126) mit einer Triebwerksvorrichtung (10) und einem Brennstofftank (128) zum Aufnehmen von einem fluidischen, insbesondere flüssigen, Brennstoff (102), **dadurch gekennzeichnet, dass** die Triebwerksvorrichtung (10) in Form einer Triebwerksvorrichtung (10) nach Anspruch 13 ausgebildet ist.

15. Verfahren zum Betreiben einer Triebwerksvorrichtung (10), bei welchem Verfahren ein fluidischer, insbesondere flüssiger, Brennstoff (102) und ein fluidisches, insbesondere flüssiges, Oxidationsmittels (100) mit einer Injektorvorrichtung (32) in eine Brennkammer (12) der Triebwerksvorrichtung (10) eingeleitet wird, welche Injektorvorrichtung (32) mindestens ein erstes Injektionselement (34) umfasst zum fluidwirksamen Verbinden eines ersten Sammelraums (28) für das fluidische Oxidationsmittel (100) und der Brennkammer (12), und mindestens ein zweites Injektionselement (36) zum fluidwirksamen Verbinden eines zweiten Sammelraums (30) für den fluidischen Brennstoff (102) und der Brennkammer (12), wobei akustische Eigenschwingungen im mindestens einen ersten Injektionselement (34) und/oder wobei akustische Eigenschwingungen im mindestens einen zweiten Injektionselement (36) gedämpft werden, wobei dem mindestens einen ersten Injektionselement (34) mindestens ein erstes Resonatorelement (76, 76a, 76b, 76c, 76d, 76e) zugeordnet wird und/oder wobei dem mindestens einen zweiten Injektionselement (36) mindestens ein zweites Resonatorelement (78) zugeordnet wird und wobei das mindestens eine erste Resonatorelement (76, 76a, 76b, 76c, 76d, 76e) auf eine Eigenfrequenz des zugeordneten mindestens einen ersten Injektionselements (34) abgestimmt wird und/oder wobei das mindestens eine zweite Resonatorelement (78) auf eine Eigenfrequenz des zugeordneten mindestens einen zweiten Injektionselements (36) abgestimmt wird, **dadurch gekennzeichnet, dass** das mindestens eine erste Resonatorelement (76, 76a, 76b, 76c, 76d, 76e) und der erste Sammelraum (28) über einen ersten Spülkanal (92) fluidwirksam miteinander verbunden werden und/oder dass das mindestens eine zweite Resonatorelement (78) und der zweite Sammelraum (30) über einen zweiten Spülkanal (94) fluidwirksam miteinander verbunden werden und dass durch das jeweilige Resonatorelement (76, 76a, 76b, 76c, 76d, 76e; 78) das durch die Injektionselemente (34, 36) strömende Fluid ebenfalls mit einer geringen Strömungsgeschwindigkeit strömen gelassen wird, wodurch sichergestellt werden kann, dass im jeweiligen Resonatorelement (76, 76a, 76b, 76c, 76d, 76e; 78) zu jedem Zeitpunkt dieselben Bedingungen herrschen wie in dem zu dämpfenden Injektionselement (34, 36).

## Claims

1. Injector device (32) for an engine device (10) for introducing a fluidic, in particular a liquid, fuel (102) and a fluidic, in particular liquid, oxidizing agent (100) into a combustion chamber (12) of the engine device (10), which injector device (32) defines a longitudinal axis (16) and comprises at least one first injection element (34), which is configured in the form of a first fluid channel (38) for fluidically connecting a first collection space (28) for the fluidic oxidizing agent (100) and the combustion chamber (12), and at least one second injection element (36), which is configured in the form of a second fluid channel (40) for fluidically connecting a second collection space (30) for the fluidic fuel (102) and the combustion chamber (12), wherein at least one first resonator element (76, 76a, 76b, 76c, 76d, 76e) is associated with the at least one first injection element (34) and/or wherein at least one second resonator element (78) is associated with the at least one second injection element (36), and wherein the at least one first resonator element (76, 76a, 76b, 76c, 76d, 76e) is adapted to an eigenfrequency of the associated at least one first injection element (34) and/or wherein the at least one second resonator element (78) is adapted to an eigenfrequency of the associated at least one second injection element (36), **characterized in that** the at least one first resonator element (76, 76a, 76b, 76c, 76d, 76e) and the first collection space (28) are fluidically connected to one another by way of a first flushing channel (92) and/or **in that** the at least one second resonator element (78) and the second collection space (30) are fluidically connected to one another by way of a second flushing channel (94), so that the fluid flowing through the injection elements (34, 36) also flows at a low flow speed through the respective resonator element (76, 76a, 76b, 76c, 76d, 76e; 78), thereby ensuring that the same conditions prevail in the respective resonator element (76, 76a, 76b, 76c, 76d, 76e; 78) at any one time as in the injection element (34, 36) to be dampened.

2. Injector device in accordance with Claim 1, **characterized in that** the at least one first resonator element (76, 76a, 76b, 76c, 76d, 76e) is fluidically connected to the at least one first injection element (34) and/or **in that** the at least one second resonator element (78) is fluidically connected to the at least one second injector element (36).

3. Injector device in accordance with any one of the preceding Claims, **characterized in that** the at least one first resonator element (76, 76a, 76b, 76c, 76d, 76e) comprises a first resonator cavity (84), which defines a first resonator volume, and **in that** a first resonator channel (104, 104a, 104b, 104c, 104d, 104e) fluidically connects the at least one first injection element (34) and the first resonator cavity (84) and/or **in that** the at least one second resonator element (78) comprises a second resonator cavity (86), which defines a second resonator volume, and **in that** a second resonator channel (106) fluidically connects the at least one second injection element (36) and the second resonator cavity (86), wherein, in particular,
a) the first resonator channel (104, 104a, 104b, 104c, 104d, 104e) defines a first resonator channel volume and wherein the first resonator channel volume is smaller than the first resonator volume and/or wherein the second resonator channel (106) defines a second resonator channel volume and wherein the second resonator channel volume is smaller than the second resonator volume
and/or
b) the first resonator cavity (84) and/or the second resonator cavity (86) is configured **in that** form of a hollow cylinder, a hollow cuboid (88, 90), or a hollow sphere.

4. Injector device in accordance with any one of the preceding Claims, **characterized in that**
a) the at least one first injection element (34) defines a first injection element longitudinal axis (42) and/or **in that** the at least one second injection element (36) defines a second injection element longitudinal axis (44),
and/or
b) the at least one first resonator element (76, 76a, 76b, 76c, 76d, 76e) defines a first resonator element longitudinal axis (80) and/or in that the at least one second resonator element (78) defines a second resonator element longitudinal axis (82),
and/or
c) the at least one first injection element (34) and the at least one second injection element (36) are arranged or formed coaxially to one another
and/or
d) the at least one first flushing channel (92) defines a first flushing channel axis (96) and/or **in that** the at least on second flushing channel (94) defines a second flushing channel axis (98).

5. Injector device in accordance with any one of the preceding Claims, **characterized in that** a first flushing channel cross-sectional area defined by the at least one first flushing channel (92) is smaller than a first resonator channel cross-sectional area defined by the first resonator channel (104, 104a, 104b, 104c, 104d, 104e) and/or **in that** a second flushing channel cross-sectional area defined by the at least one second flushing channel (92) is smaller than a second resonator channel cross-sectional area defined by the second resonator channel (106).

6. Injector device in accordance with any one of the preceding Claims, **characterized in that**
a) the at least one first resonator element (76, 76a, 76b, 76c, 76d, 76e) and/or **in that** the at least one second resonator element (78) is configured in the form of a Helmholtz resonator or in the form of a λ/4 resonator
and/or
b) the at least one first resonator element (76, 76a, 76b, 76c, 76d, 76e) is associated with at least one first injection element (34) and/or **in that** the at least one second resonator element (78) is associated with at least one second injection element (36).

7. Injection device in accordance with any one of the preceding Claims, **characterized in that** the injector device (32) comprises a plurality of first injection elements (34) and/or a plurality of second injection elements (36).

8. Injector device in accordance with any one of the preceding Claims, **characterized in that** the at least one first resonator element (76, 76a, 76b, 76c, 76d, 76e) is arranged or formed in the region of an inlet (118) of the at least one first injection element (34) facing in the direction toward the first collection space (28) and/or **in that** the at least one second resonator element (78) is arranged or formed in the region of an inlet (120) of the at least one second injection element (36) facing in the direction toward the second collection space (30).

9. Injector device in accordance with any one of the preceding Claims, **characterized in that** the injector device (32) comprises a first injector plate (50) and a second injector plate (26), **in that** the at least one first resonator elements (76, 76a, 76b, 76c, 76d, 76e) are arranged or formed in the first injector plate (50) and/or **in that** the at least one second resonator elements (78) are arranged or formed in the second injector plate (122).

10. Injector device in accordance with any one of the preceding Claims, **characterized in that** the at least one first injection element (34) is arranged on a plate-shaped injector element holder (46) and is configured in the form of an injector sleeve (48).

11. Injector device in accordance with any one of the preceding Claims, **characterized in that** the at least one second injection element (36) is arranged or formed on or in an injection head (52).

12. Injector device in accordance with any one of the preceding Claims, **characterized in that** that the at least one second injection element (36) tapers in cross section in a single stage to form a second throttle element.

13. Engine device (10), in particular for an aircraft (136) and/or a spacecraft (126), which engine device (10) comprises a combustion chamber (12) with a nozzle (22) and comprises an injector device (32) arranged opposite the nozzle (22), **characterized in that** the injector device (32) is configured in accordance with any one of the preceding Claims.

14. Aircraft and/or spacecraft (136, 126) with an engine device (10) and a fuel tank (128) for accommodating a fluidic, in particular liquid, fuel (102), **characterized in that** the engine device (10) is configured in the form of an engine device (10) in accordance with Claim 13.

15. Method for operating an engine device (10), in which method a fluidic, in particular liquid, fuel (102) and a fluidic, in particular liquid, oxidizing agent (100) is introduced with an injector device (32) into a combustion chamber (12) of the engine device (10), which injector device (32) comprises at least one first injection element (34) for fluidically connecting a first collection space (28) for the fluidic oxidizing agent (100) and the combustion chamber (12), and at least one second injection element (36) for fluidically connecting a second collection space (30) for the fluidic fuel (102) and the combustion chamber (12), wherein acoustic natural vibrations in the at least one first injection element (34) and/or wherein acoustic natural vibrations in the at least one second injection element (36) are dampened, wherein at least one first resonator element (76, 76a, 76b, 76c, 76d, 76e) is associated with the at least one first injection element (34) and/or wherein at least one second resonator element (78) is associated with the at least one second injection element (36), and wherein the at least one first resonator element (76, 76a, 76b, 76c, 76d, 76e) is adapted to an eigenfrequency of the associated at least one first injection element (34) and/or wherein the at least one second resonator element (78) is adapted to an eigenfrequency of the associated at least one second injection element (36), **characterized in that** the at least one first resonator element (76, 76a, 76b, 76c, 76d, 76e) and the first collection space (28) are fluidically connected to one another by way of a first flushing channel (92) and/or in that the at least one second resonator element (78) and the second collection space (30) are fluidically connected to one another by way of a second flushing channel (94), and **in that** the fluid flowing through the injection elements (34, 36) also is let flown at a low flow speed through the respective resonator element (76, 76a, 76b, 76c, 76d, 76e), thereby ensuring that the same conditions prevail in the respective resonator element (76, 76a, 76b, 76c, 76d, 76e) at any one time as in the injection element (34, 36) to be dampened.

## Revendications

1. Dispositif d'injection (32) pour un dispositif de propulsion (10) pour l'introduction d'un carburant (102) fluide, plus particulièrement liquide, et d'un agent oxydant (100) fluide, plus particulièrement liquide, dans une chambre de combustion (12) du dispositif de propulsion (10), ce dispositif d'injection (32) définissant un axe longitudinal (16) et comprenant au moins un premier élément d'injection (34), qui se présente sous la forme d'un premier canal de fluide (38) et qui est conçu pour la liaison fluidique d'une première chambre collectrice (28) pour l'agent oxydant fluide (100) avec la chambre de combustion (12), et au moins un deuxième élément d'injection (36), qui se présente sous la forme d'un deuxième canal de fluide (40) et qui est conçu pour la liaison fluidique d'une deuxième chambre collectrice (30) pour le carburant fluide (102) avec la chambre de combustion (12), dans lequel au moins un premier élément de résonance (76, 76a, 76b, 76c, 76d, 76e) est assigné à l'au moins un premier élément d'injection (34) et/ou dans lequel au moins un deuxième élément de résonance (78) est assigné à l'au moins un deuxième élément d'injection (36), et dans lequel l'au moins un premier élément de résonance (76, 76a, 76b, 76c, 76d, 76e) est syntonisé avec une fréquence propre de l'au moins un premier élément d'injection (34) assigné et/ou dans lequel l'au moins un deuxième élément de résonance (78) est syntonisé avec une fréquence propre de l'au moins un deuxième élément d'injection (36) assigné, **caractérisé en ce que** l'au moins un premier élément de résonance (76, 76a, 76b, 76c, 76d, 76e) et la première chambre collectrice (28) sont reliés entre eux de manière fluidique par l'intermédiaire d'un premier canal de rinçage (92) et/ou **en ce que** l'au moins un deuxième élément de résonance (78) et la deuxième chambre collectrice (30) sont reliés entre eux de manière fluidique par l'intermédiaire d'un deuxième canal de rinçage (94), de sorte que, grâce à l'élément de résonance (76, 76a, 76b, 76c, 76d, 76e; 78) respectif, le fluide s'écoulant à travers les éléments d'injection (34, 36), s'écoule également avec une faible vitesse d'écoulement, ce qui permet de s'assurer que, dans l'élément de résonance (76, 76a, 76b, 76c, 76d, 76e; 78) respectif, règnent, à tout moment, les mêmes conditions que dans l'élément d'injection (34, 36) à amortir.

2. Dispositif d'injection selon la revendication 1, **caractérisé en ce que** l'au moins un premier élément de résonance (76, 76a, 76b, 76c, 76d, 76e) est relié de manière fluidique avec l'au moins un premier élément d'injection (34) et/ou **en ce que** l'au moins un deuxième élément de résonance (78) est relié de manière fluidique avec l'au moins un deuxième élément d'injection (36).

3. Dispositif d'injection selon l'une des revendications précédentes, **caractérisé en ce que** l'au moins un premier élément de résonance (76, 76a, 76b, 76c, 76d, 76e) comprend une première cavité de résonance (84), qui définit un premier volume de résonance, et **en ce qu'**un premier canal de résonance (104, 104a, 104b, 104c, 104d, 104e) relie de manière fluidique l'au moins un premier élément d'injection (34) et la première cavité de résonance (84) et/ou **en ce que** l'au moins un deuxième élément de résonance (78) comprend une deuxième cavité de résonance (86), qui définit un deuxième volume de résonance, et **en ce qu'**un deuxième canal de résonance (106) relie de manière fluidique l'au moins un deuxième élément d'injection (36) et la deuxième cavité de résonance (86),
dans lequel en particulier
a) le premier canal de résonance (104, 104a, 104b, 104c, 104d, 104e) définit un premier volume de canal de résonance et dans lequel le premier volume de canal de résonance est inférieur au premier volume de résonance et/ou dans lequel le deuxième canal de résonance (106) définit un deuxième volume de canal de résonance et dans lequel le deuxième volume de canal de résonance est inférieur au deuxième volume de résonance
et/ou
b) la première cavité de résonance (84) et/ou la deuxième cavité de résonance (86) se présente sous la forme d'un cylindre creux, d'un parallélépipède creux (88, 90) ou d'une sphère creuse.

4. Dispositif d'injection selon l'une des revendications précédentes, **caractérisé en ce que**
a) l'au moins un premier élément d'injection (34) définit un premier axe longitudinal d'élément d'injection (42) et/ou **en ce que** l'au moins un deuxième élément d'injection (36) définit un deuxième axe longitudinal d'élément d'injection (44)
et/ou
b) l'au moins un premier élément de résonance (76, 76a, 76b, 76c, 76d, 76e) définit un premier axe longitudinal d'élément de résonance (80) et/ou **en ce que** l'au moins un deuxième élément de résonance (78) définit un deuxième axe longitudinal d'élément de résonance (82)
et/ou
c) l'au moins un premier élément d'injection (34) et l'au moins un deuxième élément d'injection (36) sont disposés ou réalisés de manière coaxiale entre eux
et/ou
d) l'au moins un premier canal de rinçage (92) définit un premier axe longitudinal de canal de rinçage (96) et/ou **en ce que** l'au moins un deuxième canal de rinçage (94) définit un deuxième axe longitudinal de canal de rinçage (98).

5. Dispositif d'injection selon l'une des revendications précédentes, **caractérisé en ce qu'**une première surface de section transversale de canal de rinçage, définie par l'au moins un premier canal de rinçage (92), est plus petite qu'une première surface de section transversale de canal de résonance, définie par le premier canal de résonance (104, 104a, 104b, 104c, 104d, 104e) et/ou **en ce qu'**une deuxième surface de section transversale de canal de rinçage, définie par l'au moins un deuxième canal de rinçage (92), est plus petite qu'une surface de section transversale de canal de résonance, définie par le deuxième canal de résonance (106).

6. Dispositif d'injection selon l'une des revendications précédentes, **caractérisé en ce que**
a) l'au moins un premier élément de résonance (76, 76a, 76b, 76c, 76d, 76e) et/ou l'au moins un deuxième élément de résonance (78) se présentent sous la forme d'un résonateur de Helmholtz ou sous la forme d'un résonateur λ/4
et/ou
b) l'au moins un premier élément de résonance (76, 76a, 76b, 76c, 76d, 76e) est assigné à au moins un premier élément d'injection (34) et/ou **en ce que** l'au moins un deuxième élément de résonance (78) est assigné à au moins un deuxième élément d'injection (36).

7. Dispositif d'injection selon l'une des revendications précédentes, **caractérisé en ce que** le dispositif d'injection (32) comprend une pluralité de premiers éléments d'injection (34) et/ou une pluralité de deuxièmes éléments d'injection (36).

8. Dispositif d'injection selon l'une des revendications précédentes, **caractérisé en ce que** l'au moins un premier élément de résonance (76, 76a, 76b, 76c, 76d, 76e) est disposé ou réalisé au niveau d'une entrée (118), orientée en direction de la première chambre collectrice (28), de l'au moins un premier élément d'injection (34) et/ou **en ce que** l'au moins un deuxième élément de résonance (78) est disposé ou réalisé au niveau d'une entrée (120), orientée en direction de la deuxième chambre collectrice (30), de l'au moins un deuxième élément d'injection (36).

9. Dispositif d'injection selon l'une des revendications précédentes, **caractérisé en ce que** le dispositif d'injection (32) comprend une première plaque d'injection (50) et une deuxième plaque d'injection (26), **en ce que** l'au moins un premier élément de résonance (76, 76a, 76b, 76c, 76d, 76e) est disposé ou réalisé dans la première plaque d'injection (50) et/ou **en ce que** l'au moins un deuxième élément de résonance (78) est disposé ou réalisé dans la deuxième plaque d'injection (122).

10. Dispositif d'injection selon l'une des revendications précédentes, **caractérisé en ce que** l'au moins un premier élément d'injection (34) est disposé sur un support d'élément d'injection en forme de plaque (46) et se présente sous la forme d'une douille d'injection (48).

11. Dispositif d'injection selon l'une des revendications précédentes, **caractérisé en ce que** l'au moins un deuxième élément d'injection (36) est disposé ou réalisé sur ou dans une tête d'injection (52).

12. Dispositif d'injection selon l'une des revendications précédentes, **caractérisé en ce que** l'au moins un deuxième élément d'injection (36) se rétrécit en une étape dans sa section transversale afin de former un deuxième élément d'étranglement.

13. Dispositif de propulsion (10), plus particulièrement pour un aéronef (136) et/ou un astronef (126), ce dispositif de propulsion (10) comprenant une chambre de combustion (12) avec une buse (22) et un dispositif d'injection (32) disposé en face de la buse (22), **caractérisé en ce que** le dispositif d'injection (32) est conçu selon l'une des revendications précédentes.

14. Aéronef et/ou astronef (136, 126) avec un dispositif de propulsion (10) et un réservoir de carburant (128) pour le logement d'un carburant (102) fluide, plus particulièrement liquide, **caractérisé en ce que** le dispositif de propulsion (10) se présente sous la forme d'un dispositif de propulsion (10) selon la revendication 13.

15. Procédé de fonctionnement d'un dispositif de propulsion (10), dans lequel un carburant (102) fluide, plus particulièrement liquide, et un agent oxydant (100) fluide, plus particulièrement liquide, sont introduits dans une chambre de combustion (12) du dispositif de propulsion (10) par un dispositif d'injection (32), ce dispositif d'injection (32) comprenant au moins un premier élément d'injection (34), pour la liaison fluidique d'une première chambre collectrice (28) pour l'agent oxydant fluide (100) avec la chambre de combustion (12), et au moins un deuxième élément d'injection (36) pour la liaison fluidique d'une deuxième chambre collectrice (30) pour le carburant fluide (102) avec la chambre de combustion (12), dans lequel les vibrations acoustiques propres dans l'au moins un premier élément d'injection (34) et/ou dans lequel les vibrations acoustiques propres dans l'au moins un deuxième élément d'injection (36) sont amorties, dans lequel au moins un premier élément de résonance (76, 76a, 76b, 76c, 76d, 76e) est assigné à l'au moins un premier élément d'injection (34) et/ou dans lequel au moins un deuxième élément de résonance (78) est assigné à l'au moins un deuxième élément d'injection (36), et dans lequel l'au moins un premier élément de résonance (76, 76a, 76b, 76c, 76d, 76e) est syntonisé avec une fréquence propre de l'au moins un premier élément d'injection (34) assigné et/ou dans lequel l'au moins un deuxième élément de résonance (78) est syntonisé avec une fréquence propre de l'au moins un deuxième élément d'injection (36) assigné, **caractérisé en ce que** l'au moins un premier élément de résonance (76, 76a, 76b, 76c, 76d, 76e) et la première chambre collectrice (28) sont reliés entre eux de manière fluidique par l'intermédiaire d'un premier canal de rinçage (92) et/ou **en ce que** l'au moins un deuxième élément de résonance (78) et la deuxième chambre collectrice (30) sont reliés entre eux de manière fluidique par l'intermédiaire d'un deuxième canal de rinçage (94) et **en ce que**, par l'élément de résonance (76, 76a, 76b, 76c, 76d, 76e; 78) respectif, le fluide s'écoulant à travers les éléments d'injection (34, 36), s'écoule également avec une faible vitesse d'écoulement, ce qui permet de s'assurer que, dans l'élément de résonance (76, 76a, 76b, 76c, 76d, 76e; 78) respectif, règnent, à tout moment, les mêmes conditions que dans l'élément d'injection (34, 36) à amortir.
